# EUROPEAN PATENT APPLICATION

(11) **EP 4 804 586 A1**
(43) Date of publication of application: **09.09.2026**
(21) Application number: 24897860.3
(22) Date of filing: 07.10.2024
(51) Int. Cl.: H04W 16/14, H04W 72/0446, H04W 28/16, H04W 48/16, H04W 12/04, H04W 64/00, H04W 88/08

(54) **DEVICE, METHOD, AND STORAGE MEDIUM FOR PROVIDING SERVICE BY USING LICENSE-EXEMPT SPECTRUM**

(30) Priority: 28.11.2023 KR 20230168693; 06.12.2023 KR 20230175820
(71) Applicant: Samsung Electronics Co., Ltd., Suwon-si, Gyeonggi-do 16677 (KR)
(72) Inventor: YOON, Seungil, Suwon-si Gyeonggi-do 16677 (KR)
(74) Representative: Gulde & Partner
(86) International application number: PCT/KR2024/015201
(87) International publication number: WO 2025/116261

(57) **Abstract**

A radio unit (RU) device may comprise: a memory for storing instructions; a transceiver; and at least one processor. The instructions, when executed individually or collectively by the processor, may cause the device to transmit, to a DU, a management plane message including configuration information for requesting a spectrum for citizens broadband radio service (CBRS). The configuration information may include a mode in which the RU moves on a predetermined path and path information about each of regions of the predetermined path. The instructions, when executed individually or collectively by the processor, may cause the device to: communicate, in a first area, with a terminal in a first cell operating in a first spectrum assigned on the basis of the configuration information; and communicate, in a second area changed from the first area according to the movement of the RU, with the terminal in a second cell operating in a second spectrum assigned on the basis of the configuration information.

## Description

### [Technical Field]

The following descriptions relate to a device, a method, and a storage medium for providing service using a license-exempted spectrum.

### [Background Art]

An operator may provide a service to a user through a specific frequency band. For example, the specific frequency band may be referred to as a spectrum. For example, the specific frequency band may include a licensed band, a shared spectrum, and an unlicensed band.

As transmission capacity increases in a wireless communication system, a function split that functionally separates a base station is being applied. According to the function split, the base station may be separated into a distributed unit (DU) and a radio unit (RU). A fronthaul interface is defined for communication between the DU and the RU.

### [Disclosure]

### [Technical Solution]

A radio unit (RU) may comprise memory storing instructions. The RU may comprise a transceiver. The RU may comprise at least one processor. The instructions, when executed by the at least one processor individually or collectively, may cause the RU to, based on a start-up procedure with a distributed unit (DU), transmit, to the DU, a management plane message including configuration information requesting a spectrum for citizens broadband radio service (CBRS). The configuration information may include a mode in which the RU is moving on a predetermined path and path information for each of areas of the predetermined path. The instructions, when executed by the at least one processor individually or collectively, may cause the RU to perform communication with at least one user equipment (UE) on a first cell according to a first spectrum allocated based on the configuration information in a first area from among the areas. The instructions, when executed by the at least one processor individually or collectively, may cause the RU to perform communication with at least one UE on a second cell according to a second spectrum allocated based on the configuration information in a second area changed from the first area according to moving of the RU from among the areas.

A method performed by a radio unit (RU) may comprise, based on a start-up procedure with a distributed unit (DU), transmitting, to the DU, a management plane message including configuration information requesting a spectrum for citizens broadband radio service (CBRS). The configuration information may include a mode in which the RU is moving on a predetermined path and path information for each of areas of the predetermined path. The method may comprise performing communication with at least one user equipment (UE) on a first cell according to a first spectrum allocated based on the configuration information in a first area from among the areas. The method may comprise performing communication with at least one UE on a second cell according to a second spectrum allocated based on the configuration information in a second area changed from the first area according to moving of the RU from among the areas.

A non-transitory computer-readable storage medium, when executed by at least one processor of a radio unit (RU) comprising a transceiver individually or collectively, may store one or more programs including instructions that cause the RU to, based on a start-up procedure with a distributed unit (DU), transmit, to the DU, a management plane message including configuration information requesting a spectrum for citizens broadband radio service (CBRS). The configuration information may include a mode in which the RU is moving on a predetermined path and path information for each of areas of the predetermined path. The non-transitory computer-readable storage medium, when executed by the at least one processor individually or collectively, may store one or more programs including instructions that cause the RU to perform communication with at least one user equipment (UE) on a first cell according to a first spectrum allocated based on the configuration information in a first area from among the areas. The non-transitory computer-readable storage medium, when executed by the at least one processor individually or collectively, may store one or more programs including instructions that cause the RU to perform communication with at least one UE on a second cell according to a second spectrum allocated based on the configuration information in a second area changed from the first area according to moving of the RU from among the areas.

### [Description of the Drawings]

FIG. 1 illustrates an example of a wireless communication system.
FIG. 2A illustrates an example of network entities according to a distributed deployment.
FIG. 2B illustrates an example of a fronthaul interface of an open-radio access network (O-RAN).
FIG. 3A illustrates an example of a functional configuration of a distributed unit (DU).
FIG. 3B illustrates an example of a functional configuration of a radio unit (RU).
FIG. 4A illustrates an example of a system for allocating a spectrum for providing a service.
FIG. 4B illustrates an example of a method for allocating a license-exempted spectrum.
FIG. 4C illustrates an example of a start-up procedure.
FIG. 5 illustrates an example of a signal flow for a method for allocating a license-exempted spectrum to an RU, in a case that a mode indicating a flying path of the RU is a first mode.
FIG. 6 illustrates an example of a signal flow for a method for allocating a license-exempted spectrum to an RU, in a case that a mode indicating a flying path of the RU is a second mode.
FIG. 7 illustrates an example of a signal flow for a method for allocating a licensed band to an RU, in a case that a license-exempted spectrum is not available.
FIG. 8 illustrates an example of a signal flow for a method in which an RU maintains communication with a DU through device to device (D2D) communication.
FIG. 9 illustrates an example of an operation flow for a method for performing communication through an allocated spectrum, while an RU is moving on a predetermined path.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to a signal (e.g., a packet, a message, a signal, information, , or signaling), a term referring to a resource (e.g., a section, a symbol, a slot, a subframe, a radio frame, a subcarrier, a resource element (RE), a resource block (RB), a bandwidth part (BWP), a band, or a spectrum), a term for a computation state (e.g., a step, an operation, or a procedure), a term referring to data (e.g., a packet, a message, a user stream, information, a bit, a symbol, or a codeword), a term referring to a channel, a term referring to network entities (a distributed unit (DU), a radio unit (RU), a central unit (CU), a CU-control plane (CP), a CU-user plane (UP), O-open radio access network (RAN) DU (O-DU), O-RAN RU (O-RU), O-RAN CU (O-CU), (O-RAN CU-CP (O-CU-UP), O-RAN CU-CP (O-CU-CP)), a term referring to a component of a device, and the like used in the following descriptions are exemplified for convenience of description. Therefore, the present disclosure is not limited to terms described below, and another term having an equivalent technical meaning may be used. In addition, a term such as '...unit', '...device', '...object', and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

Although the present disclosure describes embodiments using terms used in some communication standards (e.g., 3rd Generation Partnership Project (3GPP)), these are only examples for explanation. The embodiments of the present disclosure may applied to other communication and broadcast systems.

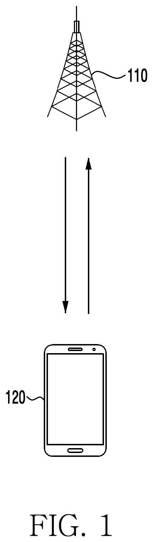

FIG. 1 illustrates a wireless communication system.

Referring to FIG. 1, FIG. 1 illustrates a base station 110 and a terminal 120 as a portion of nodes that utilize a wireless channel in a wireless communication system. FIG. 1 illustrates only one base station, but a wireless communication system may further include another base station that is identical or similar to the base station 110.

The base station 110 is a network infrastructure that provides wireless access to the terminal 120. The base station 110 has coverage defined based on a distance at which a signal may be transmitted. In addition to 'base station', the base station 110 may be referred to as an 'access point (AP)', 'eNodeB (eNB)', '5th generation node', 'next generation nodeB (gNB)', 'wireless point', 'transmission/reception point (TRP)' or other terms having equivalent technical meanings.

The terminal 120, which is a device used by a user, performs communication with the base station 110 through a wireless channel. A link from the base station 110 to the terminal 120 is referred to as a downlink (DL), and a link from the terminal 120 to the base station 110 is referred to as an uplink (UL). In addition, although not illustrated in FIG. 1, the terminal 120 and another terminal may perform communication with each other through a wireless channel. At this time, a link (device-to-device link (D2D)) between the terminal 120 and the other terminal is referred to as a sidelink, and the sidelink may be used interchangeably with a PC5 interface. In some other embodiments, the terminal 120 may be operated without the user's involvement. According to an embodiment, the terminal 120, which is a device performing machine type communication (MTC), may not be carried by the user. Additionally, according to an embodiment, the terminal 120 may be a narrowband (NB)-internet of things (IoT) device.

In addition to 'terminal', the terminal 120 may also be referred to as 'user equipment (UE) ', 'customer premises equipment, (CPE) ', 'mobile station', 'subscriber station', 'remote terminal', 'wireless terminal', 'electronic device', 'user device', or other terms having equivalent technical meanings.

The base station 110 may perform beamforming with the terminal 120. The base station 110 and the terminal 120 may transmit and receive a wireless signal in a relatively low frequency band (e.g., frequency range 1 (FR 1) of NR). In addition, the base station 110 and the terminal 120 may transmit and receive a wireless signal in a relatively high frequency band (e.g., FR 2 (or FR 2-1, FR 2-2, FR 2-3) or FR 3), and a mmWave band (e.g., 28GHz, 30GHz, 38GHz, 60GHz). The base station 110 and the terminal 120 may perform beamforming to improve a channel gain. Herein, the beamforming may include transmission beamforming and reception beamforming. The base station 110 and the terminal 120 may provide directivity to a transmission signal or a reception signal. To this end, the base station 110 and the terminal 120 may select serving beams through a beam search or beam management procedure. After the serving beams are selected, subsequent communication may be performed through a resource in a QCL relationship with the resource transmitting the serving beams.

If large-scale characteristics of a channel carrying a symbol on a first antenna port may be inferred from a channel carrying a symbol on a second antenna port, the first antenna port and the second antenna port may be evaluated to be in the QCL relationship. For example, large-scale characteristics may include at least one of a delay spread, a Doppler spread, a Doppler shift, an average gain, an average delay, and a spatial receiver parameter.

Although FIG. 1 describes that both the base station 110 and the terminal 120 perform beamforming, the embodiments of the present disclosure are not necessarily limited thereto. In some embodiments, the terminal may or may not perform beamforming. In addition, the base station may or may not perform beamforming. That is, either only one of the base station and the terminal may perform beamforming, or neither the base station nor the terminal may perform beamforming.

In the present disclosure, a beam refers to a spatial flow of a signal in a wireless channel, and is formed by one or more antennas (or antenna elements), and this formation process may be referred to as beamforming. Beamforming may include at least one of analog beamforming or digital beamforming (e.g., precoding). A reference signal transmitted based on beamforming may include, for example, a demodulation-reference signal (DM-RS), a channel state information-reference signal (CSI-RS), a synchronization signal/physical broadcast channel (SS/PBCH), and a sounding reference signal (SRS). In addition, an IE such as CSI-RS resource or SRS-resource may be used as a configuration for each reference signal, and this configuration may include information associated with the beam. The information associated with the beam may mean whether a corresponding configuration (e.g., CSI-RS resource) uses the same spatial domain filter as another configuration (e.g., another CSI-RS resource within the same CSI-RS resource set) or a different spatial domain filter, or which reference signal it is quasi-co-located (QCL) with, and if so, what type it is (e.g., QCL type A, B, C, D).

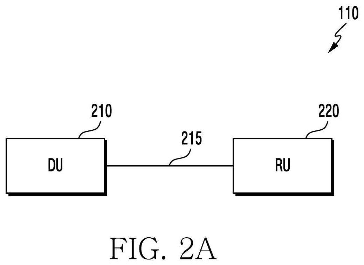

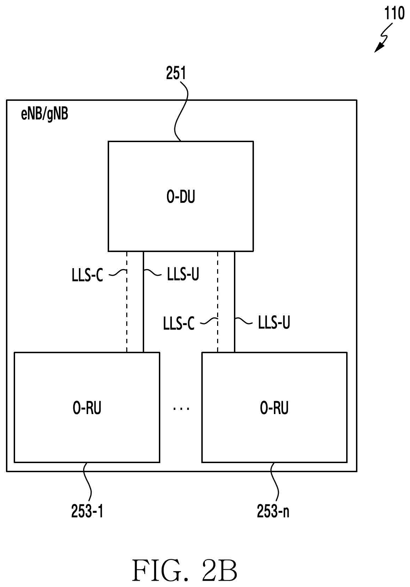

Conventionally, in a communication system with a relatively large cell radius of base station, each base station was installed to include a function of a digital processing unit (or distributed unit (DU)) and a radio frequency (RF) processing unit (or radio unit (RU)). However, as high frequency bands are used in 4th generation (4G) and/or subsequent communication systems (e.g., 5G) and the cell coverage of base stations is reduced, the number of base stations to cover a specific area has increased. The burden of installation cost for operators to install base stations has also increased. In order to minimize the installation cost of a base station, a structure in which the DU and RU of the base station are separated, one or more RUs are connected to one DU through a wired network, and one or more Rus geographically distributed to cover a specific area are deployed, has been proposed. Hereinafter, a deployment structure and expansion examples of a base station according to various embodiments of the present disclosure are described through FIGS. 2A and 2B.

FIG. 2A illustrates an example of network entities according to a distributed deployment.

For example, the network entities may include a digital unit (DU) 210 and a radio unit (RU) 220 (or a massive multiple input multiple output (MMU) unit). For example, the network entities may be connected through a fronthaul. Unlike a backhaul between a base station and a core network, the fronthaul refers to a link between entities (e.g., the DU 210, the RU 220) between a wireless LAN and a base station. FIG. 2A illustrates an example of a fronthaul structure between one DU 210 and one RU 220, but this is only for convenience of explanation and the present disclosure is not limited thereto. In other words, the embodiments of the present disclosure may also be applied to a fronthaul structure between one DU and a plurality of RU. For example, the embodiments of the present disclosure may be applied to a fronthaul structure between one DU and two RU. In addition, the embodiments of the present disclosure may also be applied to a fronthaul structure between one DU and three RU.

Referring to FIG. 2A, the base station 110 may include a DU 210 and an RU 220. A fronthaul 215 between the DU 210 and the RU 220 may be operated via an Fx interface. For operation of the fronthaul 215, an interface such as an enhanced common public radio interface (eCPRI) or radio over ethernet (ROE) may be used.

As communication technology has been developed, mobile data traffic increased, and thus the bandwidth demand required in a fronthaul between a digital unit and a radio unit has increased significantly. In a deployment such as centralized/cloud radio access network (C-RAN), the DU 210 may be implemented to perform functions for packet data convergence protocol (PDCP), radio link control (RLC), media access control (MAC), and physical (PHY), and the RU may be implemented to further perform functions for PHY layer in addition to a radio frequency (RF) function.

The DU 210 may be in charge of upper layer functions of a wireless network. For example, the DU 210 may perform functions of the MAC layer and a part of the PHY layer. Herein, a part of the PHY layer is a function performed at a higher level among the functions of the PHY layer, and may include, for example, channel encoding (or channel decoding), scrambling (or descrambling), modulation (or demodulation), and layer mapping (or layer demapping). According to an embodiment, if the DU 210 complies with an O-RAN standard, it may be referred to as an O-RAN DU (O-DU). The DU 210 may be replaced with and represented as a first network entity for a base station (e.g., gNB) in embodiments of the present disclosure, as needed.

The RU 220 may be in charge of lower layer functions of a wireless network. For example, the RU 220 may perform a part of the PHY layer, and a RF function. Herein, a part of the PHY layer is a function performed at performed at a relatively lower level than the DU 210 among the functions of the PHY layer, and may include, for example, iFFT conversion (or FFT conversion), cyclic prefix (CP) insertion (or CP removal), and digital beamforming. The RU 220 may be referred to as access unit (AU), access point (AP), transmission/reception point (TRP), remote radio head (RRH), radio unit (RU), or other terms having equivalent technical meanings. According to an embodiment, if the RU 220 complies with the O-RAN standard, it may be referred to as an O-RAN RU (O-RU). The RU 220 may be replaced with and represented as a second network entity for a base station (e.g., gNB) in embodiments of the present disclosure, as needed.

Although FIG. 2A describes that the base station 110 includes the DU 210 and the RU 220, the embodiments of the present disclosure are not limited thereto. The base station according to the embodiments may be implemented in a distributed deployment according to a centralized unit (CU) configured to perform functions of upper layers (e.g., packet data convergence protocol (PDCP), radio resource control (RRC)) of an access network and a distributed unit (DU) configured to perform functions of lower layers. As an example, the digital unit (DU) 210 may be implemented by being separated to the centralized unit (CU) and the distributed unit (DU). Between a core (e.g., 5G core (5GC) or next generation core (NGC)) network and a radio access network (RAN), the base station may be implemented in a structure in which the centralized unit (CU), the distributed unit (DU), and the radio unit (RU) are arranged in order. An interface between the centralized unit (CU) and the distributed unit (DU) may be referred to as an F1 interface.

A centralized unit (CU) may be in charge of functions of a higher layer than the distributed unit (DU), by being connected to one or more distributed units (DUs). For example, the CU may be in charge of radio resource control (RRC) and a function of a packet data convergence protocol (PDCP) layer, and the DU and the RU may be in charge of functions of lower layers. The DU may perform radio link control (RLC), media access control (MAC), and some functions (high PHY) of PHY layer, and the RU may perform remaining functions (low PHY) of the PHY layer. In addition, as an example, a digital unit (DU) may be included in a distributed unit (DU) according to the implementation of distributed deployment of the base station. Hereinafter, unless otherwise defined, it is described as operations of the digital unit (DU) and the RU, but various embodiments of the present disclosure may be applied to both of a base station arrangement including the CU or an arrangement where the DU is directly connected to a core network (i.e., the CU and the DU are integrated into a base station (e.g., NG-RAN node) which is a single entity).

FIG. 2B illustrates a fronthaul interface of an open -radio access network (O-RAN). In FIG. 2B, eNB or gNB is exemplified as a base station 110 according to distributed deployment.

Referring to FIG. 2B, the base station 110 may include an O-DU 251 and O-RUs 253-1, ..., and 253-n. Hereinafter, for convenience of explanation, an operation and a function of the O-RU 253-1 may be understood as a description of each of other O-RUs (e.g., O-RU 253-n).

The O-DU 251 is a logical node including functions among functions of a base station (e.g., eNB, gNB), except for functions allocated exclusively to the O-RU 253-1. The O-DU 251 may control operations of the O-RUs 253-1, ..., and 253-n. The O-DU 251 may be referred to as a lower layer split (LLS) central unit (CU). The O-RU 253-1 is a logical node including a subset among the functions of a base station (e.g., eNB, gNB). The real-time aspect of the control plane (C-plane) communication and user plane (U-plane) communication with the O-RU 253-1 may be controlled by the O-DU 251.

The O-DU 251 may perform communication with the O-RU 253-1 through an LLS interface. The LLS interface corresponds to a fronthaul interface. The LLS interface refers to a logical interface between the O-DU 251 and the O-RU 253-1 using lower layer functional split (i.e., intra-PHY-based functional split). The LLS-C between the O-DU 251 and the O-RU 253-1 provides a C-plane through the LLS interface. The LLS-U between the O-DU 251 and the O-RU 253-1 provides a U-plane through the LLS interface.

In FIG. 2B, entities of the base station 110 have been described as O-DU and O-RU to describe O-RAN. However, these designations are not to be construed as limiting the embodiments of the present disclosure. In embodiments described below, operations of the DU 210 may also be performed by the O-DU 251. A description of the DU 210 may be applied to the O-DU 251. Likewise, in embodiments described below, operations of the RU 220 may also be performed by the O-RU 253-1. A description of the RU 220 may be applied to the O-RU 253-1.

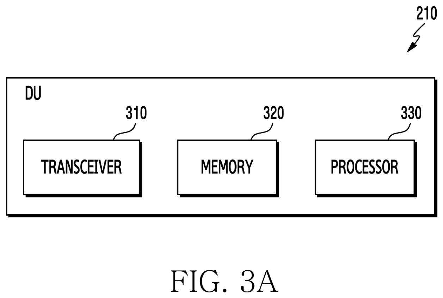

FIG. 3A illustrates a functional configuration of a distributed unit (DU).

A configuration exemplified in FIG. 3A, which is as a part of a base station, may be understood as a configuration of the DU 210 of FIG. 2A (or the O-DU 251 of FIG. 2B). Hereinafter, the terms '...unit' and '...er' used below refer to a unit processing at least one function or operation, which may be implemented by hardware or software, or a combination of hardware and software.

Referring to FIG. 3A, a DU 210 includes a transceiver 310, memory 320, and a processor 330.

The transceiver 310 may perform functions for transmitting and receiving a signal in a wired communication environment. The transceiver 310 may include a wired interface for controlling a direct device-to-device connection through a transmission medium (e.g., copper wire, optical fiber). For example, the transceiver 310 may transmit an electrical signal to another device through a copper wire or perform conversion between an electrical signal and an optical signal. The DU 210 may communicate with a radio unit (RU) through the transceiver 310. The DU 210 may be connected to a core network or a CU of a distributed deployment through the transceiver 310.

The transceiver 310 may also perform functions for transmitting and receiving a signal in a wireless communication environment. For example, the transceiver 310 may perform a conversion function between a baseband signal and a bit string according to a physical layer specification of a system. For example, upon transmitting data, the transceiver 310 generates complex-valued symbols by encoding and modulating a transmission bit string. In addition, upon receiving data, the transceiver 310 restores a received bit string by demodulating and decoding a baseband signal. In addition, the transceiver 310 may include a plurality of transmission/reception paths. In addition, according to an embodiment, the transceiver 310 may be connected to a core network or to other nodes (e.g., integrated access backhaul (IAB)).

The transceiver 310 may transmit and receive a signal. For example, the transceiver 310 may transmit a management plane (M-plane) message. For example, the transceiver 310 may transmit a synchronization plane (S-plane) message. For example, the transceiver 310 may transmit a control plane (C-plane) message. For example, the transceiver 310 may transmit a user plane (U-plane) message. For example, the transceiver 310 may receive the U-plane message. Although only the transceiver 310 is illustrated in FIG. 3A, the DU 210 may include two or more transceivers according to another implementation.

The transceiver 310 transmits and receives a signal as described above. Accordingly, all or some of the transceiver 310 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the transceiver 310.

Although not illustrated in FIG. 3A, the transceiver 310 may further include a backhaul transceiver for connection with a core network or another base station. The backhaul transceiver provides an interface for performing communication with other nodes in the network. In other words, the backhaul transceiver converts a bit string transmitted from a base station to another node, such as another access node, another base station, an upper node, and a core network into a physical signal, and converts a physical signal received from another node into a bit string.

The memory 320 stores a basic program, an application program, and data such as configuration information for an operation of the DU 210. The memory 320 may be referred to as a storage unit. The memory 320 may be configured with a volatile memory, a nonvolatile memory, or a combination of the volatile memory and the nonvolatile memory. In addition, the memory 320 provides stored data according to a request from the processor 330.

The processor 330 controls overall operations of the DU 210. The processor 380 may be referred to as a control unit. For example, the processor 330 transmits and receives a signal through the transceiver 310 (or through a backhaul communication unit). In addition, the processor 330 writes and reads data in the memory 320. In addition, the processor 330 may perform functions of a protocol stack required in a communication standard. Although only the processor 330 is illustrated in FIG. 3A, the DU 210 may include two or more processors according to another implementation.

For example, the processor 330 may include various processing circuitry and/or a plurality of processors. For example, the term "processor" used in this document including the claims may include various processing circuitry including at least one processor, and one or more of the at least one processor may be configured to individually and/or collectively perform various functions described below in a distributed manner. As used herein, when "processor", "at least one processor", and "one or more processors" are described as being configured to perform various functions, these terms encompass, for example without limitation, situations in which one processor performs a portion of the cited functions and another processor(s) performs another of the cited functions, and also situations in which one processor performs all of the cited functions. Additionally, the at least one processor may include a combination of processors performing the listed /disclosed various functions, for example, in a distributed manner. The at least one processor may execute program instructions to achieve or perform various functions.

A configuration of the DU 210 illustrated in FIG. 3A is only an example, and an example of the DU performing the embodiments of the present disclosure is not limited to the configuration illustrated in FIG. 3A. In some embodiment, some configurations may be added, deleted, or changed.

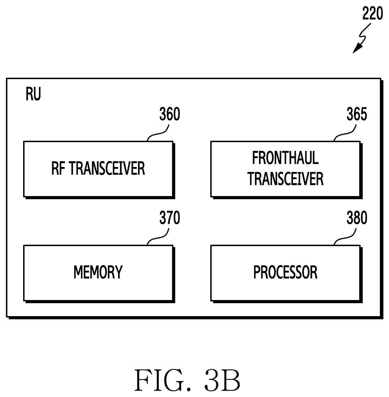

FIG. 3B illustrates a functional configuration of a radio unit (RU).

A configuration exemplified in FIG. 3B, which is as a part of a base station, may be understood as a configuration of the RU 220 of FIG. 2A or the O-RU 253-1 of FIG. 2B. Hereinafter, the terms '...unit' and '...er' used below refer to a unit processing at least one function or operation, which may be implemented by hardware or software, or a combination of hardware and software.

Referring to FIG. 3B, the RU 220 includes an RF transceiver 360, a fronthaul transceiver 365, memory 370, and a processor 380.

The RF transceiver 360 performs functions for transmitting and receiving a signal through a wireless channel. For example, the RF transceiver 360 up-converts a baseband signal into an RF band signal and then transmits it through an antenna, and down-converts an RF band signal received through the antenna into a baseband signal. For example, the RF transceiver 360 may include a transmission filter, a reception filter, an amplifier, a mixer, an oscillator, a DAC, an ADC.

The RF transceiver 360 may include a plurality of transmission/reception paths. Furthermore, the RF transceiver 360 may include an antenna unit. The RF transceiver 360 may include at least one antenna array composed of a plurality of antenna elements. In terms of hardware, the RF transceiver 360 may be composed of a digital circuit and an analog circuit (e.g., a radio frequency integrated circuit (RFIC)). Herein, the digital circuit and the analog circuit may be implemented as a single package. In addition, the RF transceiver 360 may include a plurality of RF chains. The RF transceiver 360 may perform beamforming. In order to provide directivity to a signal to be transmitted and received according to the setting of the processor 380, the RF transceiver 360 may apply beamforming weights to the signal. According to an embodiment, the RF transceiver 360 may include a radio frequency (RF) block (or RF unit).

According to an embodiment, the RF transceiver 360 may transmit and receive a signal on a radio access network. For example, the RF transceiver 360 may transmit a downlink signal. The downlink signal may include a synchronization signal (SS), a reference signal (RS) (e.g., cell-specific reference signal (CRS), demodulation (DM)-RS), system information (e.g., MIB, SIB, remaining system information (RMSI), other system information (OSI)), configuration message, control information or downlink data. In addition, for example, the RF transceiver 360 may receive an uplink signal. The uplink signal may include a random access-related signal (e.g., random access preamble (RAP)) (or message 1 (Msg1), message 3 (Msg3)), a reference signal (e.g., sounding reference signal (SRS), DM-RS), or a power headroom report (PHR). Although only the RF transceiver 360 is illustrated in FIG. 3B, the RU 220 may include two or more RF transceivers according to another implementation.

The fronthaul transceiver 365 may transmit and receive a signal. According to an embodiment, the fronthaul transceiver 365 may transmit and receive a signal on a fronthaul interface. For example, the fronthaul transceiver 365 may receive a management plane (M-plane) message. For example, the fronthaul transceiver 365 may receive a synchronization plane (S-plane) message. For example, the fronthaul transceiver 365 may receive a control plane (C-plane) message. For example, the fronthaul transceiver 365 may transmit a user plane (U-plane) message. For example, the fronthaul transceiver 365 may receive a U-plane message. Although only the fronthaul transceiver 365 is illustrated in FIG. 3B, the RU 220 may include two or more fronthaul transceivers according to another implementation.

As described above, the RF transceiver 360 and the fronthaul transceiver 365 transmit and receive a signal. Accordingly, all or some of the RF transceiver 360 and the fronthaul transceiver 365 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the RF transceiver 360. In the following description, transmission and reception performed through a wireless channel are used to the meaning including that the processing as described above is performed by the RF transceiver 360.

The memory 370 stores a basic program, an application program, and data such as configuration information for an operation of the RU 220. The memory 370 may be referred to as a storage unit. The memory 370 may be configured with a volatile memory, a nonvolatile memory, or a combination of the volatile memory and the nonvolatile memory. In addition, the memory 370 provides stored data according to a request from the processor 380. According to an embodiment, the memory 370 may include a memory for a condition, a command, or a setting value related to an SRS transmission scheme.

The processor 380 controls overall operations of the RU 220. The processor 380 may be referred to as a control unit. For example, the processor 380 transmits and receives a signal through the RF transceiver 360 or the fronthaul transceiver 365. In addition, the processor 380 writes and reads data in the memory 370. In addition, the processor 380 may perform functions of a protocol stack required by a communication standard. Although only the processor 380 is illustrated in FIG. 3B, the RU 220 may include two or more processors according to another implementation. The processor 380, which is an instruction set or code stored in the memory 370, may be an instruction/code at least temporarily resided in the processor 380 or a storage space storing instruction/code, or part of circuitry constituting the processor 380. In addition, the processor 380 may include various modules for performing communication. The processor 380 may control the RU 220 to perform operations according to embodiments to be described later.

For example, the processor 380 may include various processing circuitry and/or a plurality of processors. For example, the term "processor" used in this document including the claims may include various processing circuitry including at least one processor, and one or more of the at least one processor may be configured to individually and/or collectively perform various functions described below in a distributed manner. As used herein, when "processor", "at least one processor", and "one or more processors" are described as being configured to perform various functions, these terms encompass, for example without limitation, situations in which one processor performs a portion of the cited functions and another processor(s) performs another of the cited functions, and also situations in which one processor performs all of the cited functions. Additionally, the at least one processor may include a combination of processors performing the listed /disclosed various functions, for example, in a distributed manner. The at least one processor may execute program instructions to achieve or perform various functions.

A configuration of the RU 220 illustrated in FIG. 3B is only an example, and an example of the RU performing the embodiments of the present disclosure is not limited to the configuration illustrated in FIG. 3B. In some embodiment, some configurations may be added, deleted, or changed.

Referring to the above, the RU 220 may provide a service to at least one UE connected to the RU 220, based on configuration information received from the DU 210. For example, the RU 220 may be installed at a fixed location. Alternatively, for example, the RU 220 may be implemented as a moving body. For example, the moving body may include an unmanned aerial vehicle (UAV). The RU 220 implemented as the moving body may be referred to as a UAV RU, a UAV-O-RU, or a UAV type RU.

In a case that the RU 220 is implemented as the moving body, the RU 220 may move on a flying path. For example, the flying path may include a predetermined path or a path having a random pattern. For example, the predetermined path may be configured by an entity including the DU 210 or may be configured by an operator designing the RU 220. For example, the path having the random pattern may represent a path changed based on a service status of the at least one UE provided with a service by the RU 220 or signal quality of the path. For example, the flying path may include a plurality of areas (or locations).

For example, the spectrum for the service provided by the RU 220 may include a licensed spectrum (or a licensed band), an unlicensed spectrum (or an unlicensed band), and a spectrum. For example, the shared spectrum may include a license-exempted spectrum. As an example, the license-exempted spectrum may include a spectrum for citizens broadband radio service (CBRS) (hereinafter, a CBRS spectrum or a CBRS band). In the example, the shared spectrum and the unlicensed spectrum are described by being distinguished from each other, but an embodiment of the present disclosure is not limited thereto. For example, the unlicensed spectrum may be defined as a band including the shared spectrum. Hereinafter, for convenience of description, an example of the license-exempted spectrum that is the CBRS spectrum is described, but an embodiment of the present disclosure is not limited thereto. The service provided through the CBRS spectrum may be referred to as CBRS. The RU 220 capable of providing a service on a cell according to the CBRS spectrum may be referred to as a CBRS RU or an O-CBRS-RU.

For example, in a case that the RU 220 implemented as the moving body provides CBRS by using a CBRS spectrum (or, a UAV type CBRS RU or a UAV type O-CBRS-RU), the RU 220 may move on the flying path. For example, while the RU 220 is moving on the flying path, the RU 220 needs to use a CBRS spectrum (or a CBRS band) having a different operating frequency whenever it enters different areas from among the plurality of areas on the flying path. Alternatively, for example, while the RU 220 provides a service on the flying path, in a case that service interruption occurs, such as a case that service quality is less than reference quality, the RU 220 needs to use a CBRS spectrum, not a licensed spectrum. As described above, a method for reducing the service interruption while the RU 220 is moving on the flying path and providing a seamless service even in a change between CBRS spectrums according to movement of the RU 220 is required.

Hereinafter, a device, a method, and a storage medium according to embodiments of the present disclosure may effectively allocate a CBRS spectrum on the flying path to the RU 220 by providing configuration information for the flying path of the RU 220 to the DU 210 (or a CBSD manager), in a case that the RU 220 implemented as the moving body requests allocation of the CBRS spectrum. Accordingly, the RU 220 may provide a service having relatively high quality by performing communication with the at least one UE provided with a service on a cell according to the CBRS spectrum allocated to the RU 220.

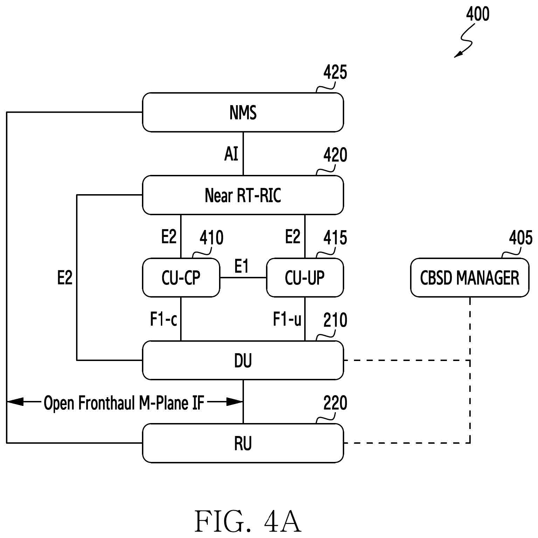

FIG. 4A illustrates an example of a system for allocating a spectrum for providing a service.

Referring to FIG. 4A, a system 400 may include an RU 220, a DU 210, a CU-CP 410, a CU-UP 415, a near-real time radio access network (RAN) intelligent controller (Near-RT RIC) 420, a network management system (NMS) 425, and a citizens broadband radio service device manager (CBSD manager) 405. For example, the RU 220 of FIG. 4A may be an example of the RU 220 of FIG. 2A or the O-RU 253-1 of FIG. 2B. For example, the DU 210 of FIG. 4A may be an example of the DU 210 of FIG. 2A or the O-DU 251 of FIG. 2B.

For example, the RU 220 may be connected to the DU 210 through an open fronthaul interface. For example, the open fronthaul interface may include the fronthaul 215 of FIG. 2A. The open fronthaul interface may include a wireless interface in a case of the RU 220 implemented as the moving body. For example, the fronthaul interface may be used to provide configuration information for a management plane. For example, the configuration information may be defined through a yet another next generation (YANG) model. In other words, the YANG model may be used as a data model. For example, the configuration information may include CBRS optional parameters implemented as the YANG model. However, an embodiment of the present disclosure is not limited thereto. For example, the RU 220 may also be connected to the DU 210 through an IAB interface (e.g., F1).

For example, the RU 220 may be connected to the CBSD manager 405 through an XX interface. The XX interface is only exemplary, and a name of an interface between the RU 220 and the CBSD manager 405 is not limited to the XX interface. For example, the XX interface may include an open fronthaul interface or an IAB interface (e.g., an F1 interface). For example, the RU 220 may be connected to the NMS 425 through the open fronthaul interface. For example, the NMS 425 may include an NMS dedicated to operations of the RU 220.

For example, the DU 210 may be connected to a CU. For example, the DU 210 may be connected to the CU-CP 410 of the CU through an F1-c interface, and may be connected to the CU-UP 415 of the CU through an F1-u interface. For example, the DU 210 may be connected to the CBSD manager 405 through a YY interface. For example, the YY interface may include an open fronthaul interface or an IAB interface (e.g., an F1 interface). The YY interface is only exemplary, and a name of an interface between the DU 210 and the CBSD manager 405 is not limited to the YY interface. For example, the DU 210 may be connected to the Near-RT RIC 420 through an E2 interface.

For example, the CU may be connected to the Near-RT RIC 420. For example, the CU-CP 410 may be connected to the Near-RT RIC 420 through an E2 interface, and the CU-UP 415 may also be connected to the Near-RT RIC 420 through the E2 interface. For example, the CU-CP 410 may be connected to the CU-UP 415 through an E1 interface.

For example, the Near-RT RIC 420 may be connected to the NMS 425 through an A1 interface. For example, the Near-RT RIC 420 may provide configuration information for providing a service through a licensed band to the RU 220 through the DU 210. In other words, the Near-RT RIC 420 may provide the configuration information for configuring a cell according to the licensed band to the RU 220. FIG. 4A illustrates an example of the system 400 including the Near-RT RIC 420, as a case of using ORAN, but an embodiment of the present disclosure is not limited thereto. For example, the system 400 may not include the Near-RT RIC 420.

For example, the CBSD manager 405 may be hosted by the NMS 425, the Near-RT RIC 420, or the CU-CP 410. For example, the CBSD manager 405 may be connected to a spectrum access system (SAS). For example, the SAS may be a CBSD SAS. For example, the CBSD manager 405 may request allocation of a spectrum from the SAS. For example, the SAS may allocate the spectrum and transfer the allocated spectrum to the CBSD manager 405. For example, the allocated spectrum may be provided to the DU 210, may be directly provided to the RU 220, or may also be transferred to the RU 220 through the DU 210. For example, the CBSD manager 405 may include a domain proxy (DP). For example, the example may be referred to as an application for performing communication with the SAS.

For example, the RU 220 may be referred to as a network configuration protocol (NETCONF) server. The NMS 425 may be referred to as a NETCONF client.

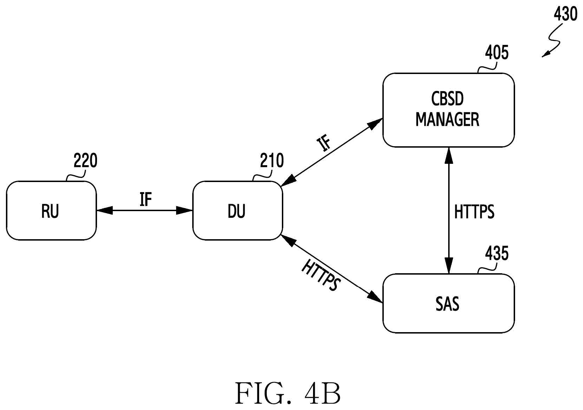

FIG. 4B illustrates an example of a method for allocating a license-exempted spectrum.

FIG. 4B illustrates an example 430 of a method for allocating the license-exempted spectrum. For example, an RU 220 of FIG. 4B may be an example of the RU 220 of FIG. 2A or the O-RU 253-1 of FIG. 2B. For example, a DU 210 of FIG. 4B may be an example of the DU 210 of FIG. 2A or the O-DU 251 of FIG. 2B. For example, a CBSD manager 405 of FIG. 4B may be an example of the CBSD manager 405 of FIG. 4A. For example, an SAS 435 of FIG. 4B may be an example of the SAS described in FIG. 4A.

Referring to the example 430, a network for allocating the license-exempted spectrum may include the RU 220, the DU 210, the CBSD manager 405, and the SAS 435. For example, the SAS 435 may be a cloud-based service (or entity) that manages the license-exempted spectrum (e.g., a CBRS spectrum or a CBRS band).

For example, the RU 220 may be connected to the DU 210 through a fronthaul interface (e.g., the fronthaul 215 of FIG. 2A). For example, the DU 210 may be connected to the CBSD manager 405 through a YY interface. For example, the DU 210 may be connected to the SAS 435 through a hypertext transfer protocol secure (HTTPS) interface. In addition, for example, the CBSD manager 405 may also be connected to the SAS 435 through the HTTPS interface.

For example, the CBSD manager 405 needs to receive a grant from the SAS 435 before starting communication in the CBRS spectrum (or the CBRS band). For example, the CBSD manager 405 may notify the DU 210 and/or the RU 220 that the communication is to be performed through the granted CBRS spectrum. Alternatively, for example, the SAS 435 may directly notify the DU 210 of the granted CBRS spectrum. Although not illustrated in FIG. 4B, the CBSD manager 405 may be directly connected to the RU 220. In the example, the CBRS spectrum may be granted within a specific area (or location) and a specific time interval (or a time duration, a time period). For example, the being granted may be understood as being substantially identical to being allocated.

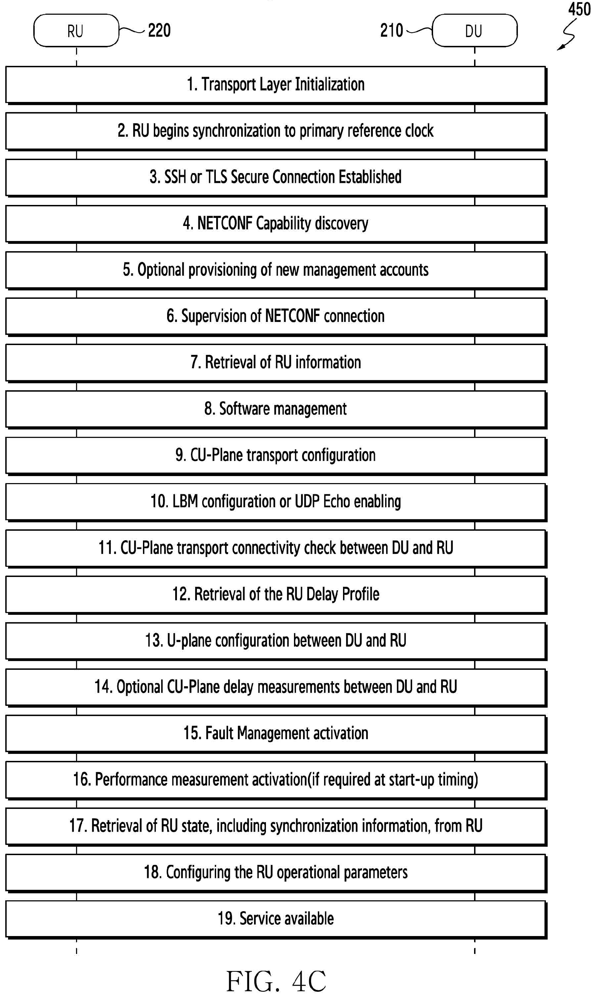

FIG. 4C illustrates an example of a start-up procedure. FIG. 4C illustrates an example 450 of the start-up procedure for management plane configuration between an RU 220 and a DU 210. For example, the RU 220 of FIG. 4C may be an example of the RU 220 of FIG. 2A or the O-RU 253-1 of FIG. 2B. For example, the DU 210 of FIG. 4C may be an example of the DU 210 of FIG. 2A or the O-DU 251 of FIG. 2B.

Although not illustrated in FIG. 4C, for example, the start-up procedure may be started in a case that the RU 220 (or a NETCONF server) is powered-on or restarted. Alternatively, for example, the start-up procedure may be started in a case that the DU 210 (or an RU controller), a NETCONF client, and/or an event controller is powered-on.

Although not illustrated in the example 450, the RU 220 may perform optional operations before performing following operation 1. For example, the RU 220 may perform 802.1X authentication. A supplicant port access entity (supplicant PAE) may be activated on a port. In addition, the RU 220 may start authentication and may attempt to perform an extensible authentication protocol (EAP) authentication dialogue with a peer authenticator PAE. For example, the RU 220 may perform an operation according to a success or a failure of EAP authentication. In a case that EAP authentication fails, the RU 220 may provide unauthenticated connectivity. In other words, the RU 220 may provide EAP failure results. In a case that the EAP authentication succeeds, the RU 220 may provide authenticated connectivity. In other words, the RU 220 may provide EAP success results.

Referring to the example 450, the RU 220 may perform transport layer initialization in the operation 1. For example, the RU 220 may perform transport layer resolution (e.g., a dynamic host configuration protocol (DHCP), a medium access control (MAC), a virtual local area network (VLAN), or an internet protocol (IP)) and may recover an IP address of the RU controller (or the DU 210).

Although not illustrated in the example 450, the RU 220 may perform optional operations after performing the operation 1. For example, the RU 220 may be registered in an operator public key infrastructure (PKI). For example, in a case that the RU 220 is not yet registered in the operator PKI, the RU 220 may discover a certificate authority/registration authority (CA/RA) server. Thereafter, the RU 220 may attempt to register in the operator PKI. After installing an operator issued certificate, the RU 220 may restart the start-up procedure.

For example, the RU 220 may start synchronization of the RU 220 against a primary reference clock in operation 2. In the example 450 of FIG. 4C, the operation 2 is illustrated as being performed after the operation 1, but an embodiment of the present disclosure is not limited thereto. For example, the operation 2 may also be performed in parallel with the operation 1.

Although not illustrated in the example 450, the RU 220 may perform optional operations after performing the operation 2. For example, the RU 220 may perform call home and/or pnfRegistration. For example, the RU 220 may call home to the RU controller. For example, the RU 220 may perform NETCONF Call Home to the RU controller (or the DU 210). For example, the RU 220 may perform pnfRegistration with respect to a discovered event controller.

For example, in operation 3, the DU 210 (or the RU controller) may perform establishment of a secure shell (SSH) or transport layer security (TLS) secure connection.

For example, in operation 4, the RU 220 and the DU 210 (or the RU controller) may perform NETCONF capability discovery.

Although not illustrated in the example 450, the DU 210 (or the RU controller) may perform optional operations after performing the operation 3. For example, the RU 220 may support NETCONF monitoring. For example, the RU controller may retrieve RU schemas.

For example, in operation 5, the DU 210 (or the RU controller) may perform optional provisioning of new management accounts. Operation 6 may be typically performed once during pre-stating.

For example, in the operation 6, the RU 220 and the DU 210 (or the RU controller) may perform supervision of a NETCONF connection.

For example, in operation 7, the DU 210 (or the RU controller) may perform retrieval of RU information.

For example, in operation 8, the DU 210 (or the RU controller) may perform software (SW) management.

For example, in operation 9, the DU 210 may perform control/user (CU) plane transport configuration.

For example, in operation 10, the DU 210 (or the RU controller) may perform LBM configuration (a CU plane through ETH) or may activate UDP echo (a CU plane through IP).

For example, in operation 11, the DU 210 (or the RU controller) may perform initiation of a CU plane transport connectivity check between the DU 210 and the RU 220.

For example, in operation 12, the DU 210 (or the RU controller) may recover an RU delay profile from the RU 220.

For example, in operation 13, the DU 210 (or the RU controller) may perform user plane configuration between the RU 220 and the DU 210.

For example, in operation 14, the DU 210 may optionally perform control plane and user plane delay measurements between the DU 210 and the RU 220. For example, in a case that the RU 220 supports the control plane and user plane delay measurements, the DU 210 may perform it.

For example, in operation 15, the DU 210 (or the RU controller) may perform fault management activation.

For example, in operation 16, the DU 210 (or the RU controller) may activate performance measurement. For example, the DU 210 may activate the performance measurement in a case that it is required at a start-up timing.

For example, in operation 17, the DU 210 (or the RU controller) may retrieve an RU status from the RU 220. For example, the RU status may include synchronization information.

For example, in operation 18, the DU 210 (or the RU controller) may configure RU operational parameters.

For example, in operation 19, a service may be used. For example, the RU 220 and the DU 210 may use the service.

Although not illustrated in the example 450 of FIG. 4C, the RU 220 and/or the DU 210 may perform operations related to CBRS within the operation 17 to the operation 19. For example, the RU 220 and/or the DU 210 (or the RU controller) may perform measurement of received power on a CBRS spectrum. The DU 210 may receive a result of the measurement from the RU 220. For example, the RU 220 and the DU 210 may exchange YANG parameters.

According to an embodiment, the DU 210 and the RU 220 may exchange CBRS YANG parameters. For example, the DU 210 and the RU 220 may exchange the CBRS YANG parameters. For example, the RU 220 supporting the CBRS may transmit the CBRS YANG parameters of the RU 220. In addition, the RU 220 supporting the CBRS may configure CBRS YANG parameters received from the DU 210. For example, the CBRS YANG parameters may be included in a management plane message.

According to an embodiment, the DU 210 and the RU 220 may exchange CBRS optional parameters. For example, the DU 210 and the RU 220 may exchange the CBRS optional parameters before (or together) exchanging the CBRS YANG parameters. Alternatively, for example, the DU 210 and the RU 220 may exchange the CBRS optional parameters after exchanging the CBRS YANG parameters. For example, the RU 220 supporting the CBRS may transmit the CBRS optional parameter of the RU 220. In addition, the RU 220 supporting the CBRS may configure the CBRS optional parameter received from the DU 210. For example, the CBRS optional parameter may be included in the management plane message. For example, the CBRS optional parameter may be referred to as an optional parameter for CBRS or CBRS spectrum request information.

According to an embodiment, the CBRS optional parameters provided from the RU 220 to the DU 210 may include configuration information requesting a spectrum for CBRS. For example, the configuration information may include a mode for a flying path in which the RU 220 is moving, in a case that the RU 220 is a moving body. For example, the mode may include a first mode in which the RU 220 is moving on a predetermined path and a second mode in which the RU 220 is moving on a path having a random pattern. For example, the first mode may be referred to as a basic mode, a predetermined path movement mode, a path movement mode, or a flying path and arrival time indication mode. The predetermined path may be configured as locations and an arrival time according to each of the locations are designated, or as the locations and the arrival time according to each of the locations are predicted by an artificial intelligence model. For example, the second mode may be referred to as an unpredictable mode or a mode in which it is moving on the path having the random pattern.

In addition, for example, the configuration information may include path information for each of areas of the flying path, in a case that the mode indicates the first mode. For example, the path information may include an identifier of an area from among the areas, coordinates indicating the area, and an expected arrival time of the RU 220 for the area. Alternatively, for example, the configuration information may include a present location of the RU 220 and a time in a case that the RU 220 is located on the present location. For example, the identifier may be referred to as identification information or area identification information. For example, the coordinates may be referred to as coordinate values, coordinate information, or location information. For example, the expected arrival time may be referred to as an expected time, an arrival time, or time information.

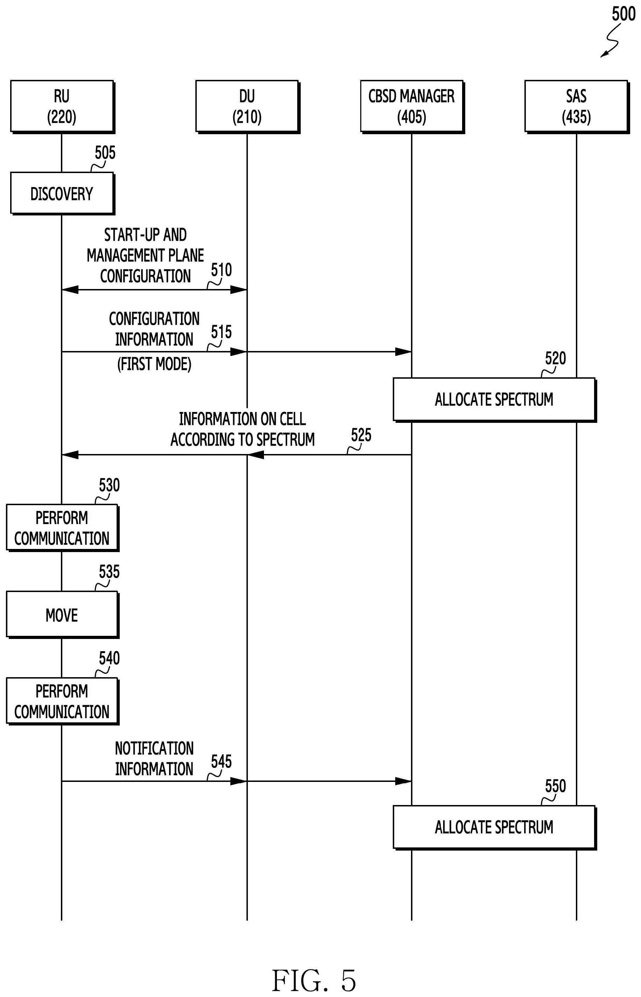

FIG. 5 illustrates an example of a signal flow for a method for allocating a license-exempted spectrum to an RU, in a case that a mode indicating a flying path of the RU is a first mode.

FIG. 5 illustrates an example 500 of a method for allocating the license-exempted spectrum (e.g., a CBRS spectrum), while an RU 220 of the first mode is moving on the flying path. For example, the RU 220 of FIG. 5 may be an example of the RU 220 of FIG. 2A or the O-RU 253-1 of FIG. 2B. For example, a DU 210 of FIG. 5 may be an example of the DU 210 of FIG. 2A or the O-DU 251 of FIG. 2B. For example, a CBSD manager 405 of FIG. 5 may be an example of the CBSD manager 405 of FIG. 4A. For example, an SAS 435 of FIG. 5 may be an example of the SAS 435 of FIG. 4B.

According to an embodiment, in operation 505, the RU 220 may perform a discovery. For example, the RU 220 may perform the discovery for a DU to be connected to the RU 220. For example, the discovery may include RU identification in a dynamic host configuration protocol (DHCP), a management plane VLAN discovery, an RU management plane IP address assignment, and an RU controller discovery.

According to an embodiment, in operation 510, the RU 220 and the DU 210 may perform start-up and management plane configuration. For example, the start-up may include procedures for the management plane configuration. For specific details of a start-up procedure, FIG. 4C described above may be referred to.

According to an embodiment, in operation 515, the RU 220 may transmit configuration information. For example, the RU 220 may transmit, to the DU 210, a management plane message including the configuration information requesting a spectrum for CBRS (or a CBRS spectrum), based on the start-up procedure. For example, the management plane message including the configuration information may be transmitted in an operation of configuring a CBRS optional parameter within the start-up procedure. For example, the configuration information may be delivered to the CBSD manager 405 through the DU 210.

In FIG. 5, an example in which exchange (or transmission) of a CBRS YANG parameter and exchange (or transmission) of the CBRS optional parameter including the configuration information are performed with the DU 210 within the start-up procedure is illustrated, but an embodiment of the present disclosure is not limited thereto. For example, the exchange (or the transmission) of the CBRS YANG parameter and the exchange (or the transmission) of the CBRS optional parameter may be directly performed with the CBSD manager 405.

According to an embodiment, the configuration information may include the first mode indicating that the RU 220 is moving on a predetermined path. For example, the first mode may represent a case that the flying path is the predetermined path, in a case that the RU 220 is moving on the flying path. For example, the RU 220 may generate the configuration information including the first mode, in a case that it is configured as the first mode by an operator. Alternatively, for example, the RU 220 may generate the configuration information including the first mode, according to determining that the flying path is the predetermined path by using artificial intelligence (AI)/machine learning (ML).

According to an embodiment, the configuration information may include path information for each of areas of the predetermined path. For example, the predetermined path may include the areas. For example, the configuration information may include a set of the path information corresponding to each of the areas. For example, the path information may include an identifier of a corresponding area from among the areas, coordinates indicating the corresponding area, and an expected arrival time of the RU 220 for the corresponding area.

For an example of the configuration information, the following table may be referred to.

**[Table 1]**

| | |
|---|---|
| • | module: cbrs-optional-modell |
| • | +--rw uav-oru-cbrs |
| • | \| +--rw flyingPath_incl string |
| • | \| +--rw flyingPath* [idLocation] |
| • | \| \| +--rw idLocation string |
| • | \| \| +--rw expectedTime string |
| • | \| \| +--rw siteLatitude? decimal64 |
| • | \| \| +--rw siteLongutude? decimal64 |

Referring to the above-described table, the flyingPath_incl may indicate a mode indicating the flying path of the RU 220. In a case that the flyingPath indicates the first mode, a set of path information according to the idLocation may be included in the configuration information (uav-oru-cbrs). For example, the idLocation may represent an identifier of a specific area. For example, the expectedTime may represent an expected time of the RU 220 arriving at the specific area. For example, the expected time may include a synchronized time between the DU 210 and the RU 220. For example, the siteLatitude and the siteLongitude may represent coordinates (e.g., latitude and longitude) of the specific area.

Although not illustrated in the above-described table, according to an embodiment, the configuration information may further include a present location of the RU 220 and a time (or a current time) in a case that the RU 220 is located on the present location. For example, the present location may include coordinates (e.g., latitude and longitude). For example, the present location may be included in the areas of the predetermined path. For example, the time may include the synchronized time between the DU 210 and the RU 220.

According to an embodiment, in operation 520, the CBSD manager 405 and the SAS 435 may allocate a spectrum. For example, the CBSD manager 405 receiving the configuration information may request allocation of a CBRS spectrum for each of the areas in the predetermined path. For example, the SAS 435 may allocate the CBRS spectrum for each of the areas in response to the request, and may transmit information on allocated spectrums to the CBSD manager 405.

For example, in a case that the areas include a first area and a second area, the SAS 435 may allocate a first spectrum (or a first CBRS spectrum) for the first area and a second spectrum (or a second CBRS spectrum) for the second area. However, this is only for convenience of description, and in a case that the areas include three or more areas, three or more spectrums corresponding to the three or more areas may be allocated. For example, the first spectrum may be used for the first area during a first time interval. For example, the first time interval may be determined based on a first expected arrival time of the RU 220 for the first area. In addition, for example, the second spectrum may be used for the second area during a second time interval. For example, the second time interval may be determined based on a second expected arrival time of the RU 220 for the second area.

Referring to the above, the CBSD manager 405 and the SAS 435 may pre-assign spectrums (or frequencies) not only for the present location of the RU 220 but also for areas to which the RU 220 is to move, based on the configuration information for the predetermined path.

According to an embodiment, after the CBSD manager 405 and the SAS 435 allocate the spectrum in the operation 520, the CBSD manager 405 may configure an absolute radio frequency channel number (ARFCN) (or an E-UTRA ARFCN (EARFCN)) and a grant expire time.

According to an embodiment, in operation 525, the CBSD manager 405 may transmit information on a cell according to the spectrum. For example, the CBSD manager 405 may transmit the information on the cell according to the spectrum to the DU 210 and/or the RU 220. As in the above-described example, in a case that the areas include the first area and the second area, the CBSD manager 405 may transmit information on a first cell according to the first spectrum and information on a second cell according to the second spectrum to the DU 210. For example, the information on the first cell according to the first spectrum and the information on the second cell according to the second spectrum may be transmitted to the RU 220 through the DU 210. Alternatively, for example, the information on the first cell according to the first spectrum and the information on the second cell according to the second spectrum may also be directly transmitted from the CBSD manager 405 to the RU 220.

According to an embodiment, the DU 210 may perform unlock of a cell and may start transmission (or communication or reception). For example, the DU 210 may unlock a pre-assigned cell of an area in which the RU 220 is located according to movement of the RU 220, and may start the transmission.

According to an embodiment, in operation 530, the RU 220 may perform communication. For example, the RU 220 may perform communication in the unlocked cell. For example, the RU 220 may perform communication with at least one UE on a cell according to a CBRS spectrum allocated for an area in which the RU 220 is currently located. For example, in a case that a present location of the RU 220 is the first area, the RU 220 may perform communication with the at least one UE on the first cell according to the first spectrum.

According to an embodiment, the RU 220 may transmit a heartbeat message for a grant while performing the communication. For example, the RU 220 may periodically transmit the heartbeat message for confirming a grant for a CBRS spectrum. For example, the RU 220 may periodically transmit the heartbeat message for the first spectrum on the first cell.

According to an embodiment, in operation 535, the RU 220 may move. For example, the RU 220 may move from the first area that is the present location to the second area. For example, the RU 220 may recognize (or detect) a change from the first area to the second area based on monitoring.

According to an embodiment, the RU 220 may perform the monitoring for the cell according to the CBRS spectrum while performing the communication. For example, the RU 220 may continuously monitor a service link status in terms of user quality (or signal quality) of a service provided by the RU 220 and/or location change. For example, the RU 220 may determine whether the RU 220 is located within a designated distance from a boundary of the first area based on a result of the monitoring. For example, in a case that the RU 220 is located within the designated distance from the boundary of the first area (and/or in a case that the RU 220 is approaching the boundary), the RU 220 may detect the change from the first area to the second area.

According to an embodiment, in operation 540, the RU 220 may perform communication. For example, in a case that a present location changed according to the movement of the RU 220 is the second area, the RU 220 may perform communication with at least one UE on the second cell according to the second spectrum.

According to an embodiment, the RU 220 may transmit a heartbeat message for a grant while performing the communication. For example, the RU 220 may periodically transmit the heartbeat message for confirming a grant for a CBRS spectrum. For example, the RU 220 may periodically transmit the heartbeat message for the second spectrum on the second cell.

According to an embodiment, the RU 220 may perform the monitoring for the cell according to the CBRS spectrum while performing the communication. For example, the RU 220 may determine whether the RU 220 is located within a designated distance from a boundary of the second area based on a result of the monitoring. For example, in a case that the RU 220 is located within the designated distance from the boundary of the second area (and/or in a case that the RU 220 is approaching the boundary), the RU 220 may detect a change from the second area to a third area. In this case, the third area may be an area (or an area not included in the areas) different from the areas in the predetermined path.

According to an embodiment, in operation 545, the RU 220 may transmit notification information. For example, in a case that the RU 220 detects the change from the second area to the third area based on a result of the monitoring for the second cell, the RU 220 may transmit, to the DU 210, a management plane message including the notification information. For example, the notification information may be delivered to the CBSD manager 405 through the DU 210. However, an embodiment of the present disclosure is not limited thereto. For example, the RU 220 may also directly transmit the notification information to the CBSD manager 405.

According to an embodiment, the notification information may include an identifier of the third area in which the RU 220 is to be located, coordinates indicating the third area, and a starting time of the RU 220 for the third area.

For an example of the notification information, the following table may be referred to.

**[Table 2]**

| | |
|---|---|
| • | module: cbrs-optional-model2 |
| • | +--rw uav-oru-cbrs-next-loc |
| • | \| +--rw idLocation string |
| • | \| +--rw startingTime string |
| • | \| +--rw siteLatitude? decimal64 |
| • | \| +--rw siteLongutude? decimal64 |

Referring to the above-described table, an example of the notification information (uav-oru-cbrs-next-loc) is described. For example, the idLocation may represent the identifier of the third area. For example, the startingTime may represent the expected time of the RU 220 arriving at the third area. For example, the starting time may include a synchronized time between the DU 210 and the RU 220. For example, the siteLatitude and the siteLongitude may represent coordinates (e.g., latitude and longitude) of the third area.

According to an embodiment, in operation 550, the CBSD manager 405 and the SAS 435 may allocate a spectrum. For example, the CBSD manager 405 receiving the notification information may request allocation of a CBRS spectrum to the third area. For example, the SAS 435 may allocate the CBRS spectrum for the third area in response to the request, and may transmit information on the allocated spectrum to the CBSD manager 405.

For example, the SAS 435 may allocate a third spectrum (or a third CBRS spectrum) for the third area. For example, the third spectrum may be used for the third area during a third time interval. For example, the third time interval may be determined based on the starting time of the RU 220 for the third area. For subsequent operations, operation 525 and operation 530 may be referred to.

In the example 500 of FIG. 5, a case that the result of the monitoring indicates location change of the RU 220 is illustrated, but an embodiment of the present disclosure is not limited thereto. For example, the RU 220 may determine whether quality of a service (or service quality or user quality) provided by the RU 220 at the present location is less than reference quality, regardless of the movement of the RU 220, based on the result of the monitoring. In an example in which the present location is the first area, the RU 220 may determine whether the service quality on the first cell is less than the reference quality. Accordingly, the RU 220 may transmit the notification information for requesting a CBRS spectrum (e.g., the third spectrum) different from the first spectrum on the first cell.

In the example 500 of FIG. 5, since a case of the RU 220 of the first mode is assumed, the operation 545 and the operation 550 may also be omitted. In other words, in a case that the RU 220 is moving only within the predetermined path, the operation 545 may be omitted.

Although not illustrated in the example 500 of FIG. 5, in a case that the RU 220 recognizes that the CBRS spectrum is not available on a cell according to the CBRS spectrum, the RU 220 may stop communication. For example, in a case that the RU 220 recognizes that an available time (or a time interval) of the CBRS spectrum expires, the RU 220 may stop the communication and may release the grant. Thereafter, the SAS 435 and the CBSD manager 405 may perform CBSD data synchronization.

Although not illustrated in the example 500 of FIG. 5, the DU 210 connected to the RU 220 may be a plurality of DUs. For example, the plurality of DUs may include a first DU managing the first area and a second DU managing the second area. The RU 220 may receive information on a first cell according to the first spectrum for the first area from the first DU, and may receive information on a second cell according to the second spectrum for the second area from the second DU.

Referring to the above, a device, a method, and a storage medium according to embodiments of the present disclosure may pre-allocate CBRS spectrums for the flying path (e.g., the predetermined path) of the RU 220 by using the configuration information provided in the operation 515. Accordingly, the device, the method, and the storage medium according to embodiments of the present disclosure may allow the RU 220 to switch to a new CBRS spectrum without interaction with the SAS 435 through the DU 210 and/or the CBSD manager 405. Accordingly, the device, the method, and the storage medium according to embodiments of the present disclosure may reduce service interruption or a probability of the service interruption that may occur as the RU 220 moves on the flying path, and may provide a seamless service.

In addition, referring to FIG. 5, the device, the method, and the storage medium according to embodiments of the present disclosure may also be applied even in a case that the RU 220 of the first mode moves on a first predetermined path and then the first predetermined path is changed to a second predetermined path. For example, according to the example 500 of FIG. 5, the RU 220 may move on the first predetermined path and may be allocated a first set of CBRS spectrums for a first set of areas on the first predetermined path. Thereafter, as the flying path is changed from the first predetermined path to the second predetermined path, the RU 220 may move on a flying path having the second predetermined path and may be allocated a second set of CBRS spectrums for a second set of areas on the second predetermined path. As an example, the second predetermined path may include a path (or a return path) defined from the present location of the RU 220 to a location of the DU 210.

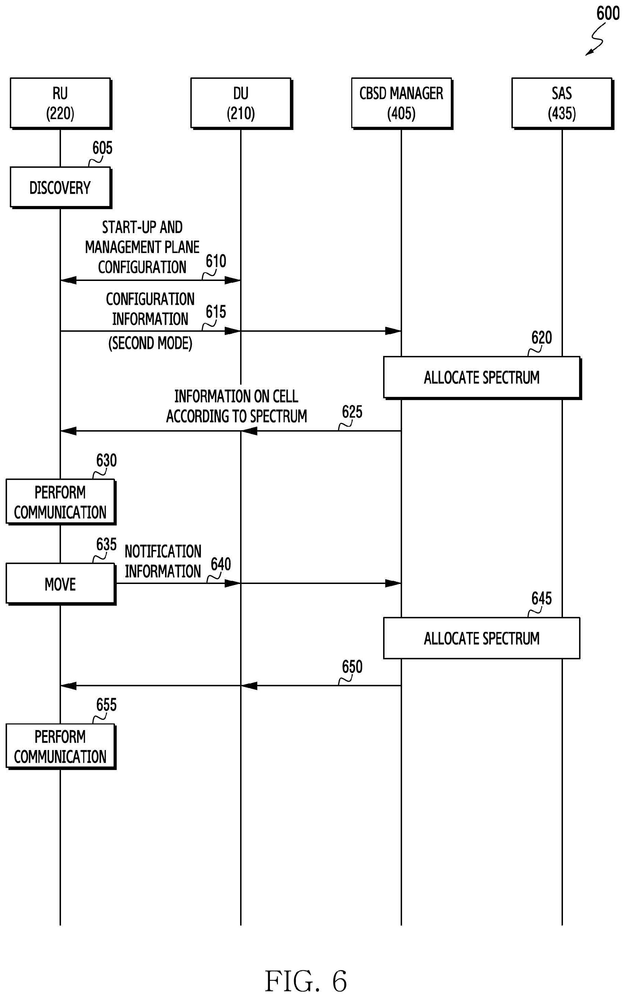

FIG. 6 illustrates an example of a signal flow for a method for allocating a license-exempted spectrum to an RU, in a case that a mode indicating a flying path of the RU is a second mode.

FIG. 6 illustrates an example 600 of a method for allocating the license-exempted spectrum (e.g., a CBRS spectrum), while an RU 220 of the second mode is moving on the flying path. For example, the RU 220 of FIG. 6 may be an example of the RU 220 of FIG. 2A or the O-RU 253-1 of FIG. 2B. For example, a DU 210 of FIG. 6 may be an example of the DU 210 of FIG. 2A or the O-DU 251 of FIG. 2B. For example, a CBSD manager 405 of FIG. 6 may be an example of the CBSD manager 405 of FIG. 4A. For example, an SAS 435 of FIG. 6 may be an example of the SAS 435 of FIG. 4B.

According to an embodiment, in operation 605, the RU 220 may perform a discovery. For example, the RU 220 may perform the discovery for a DU to be connected to the RU 220. The discovery may include RU identification in a dynamic host configuration protocol (DHCP), a management plane VLAN discovery, an RU management plane IP address assignment, and an RU controller discovery.

According to an embodiment, in operation 610, the RU 220 and the DU 210 may perform start-up and management plane configuration. For example, the start-up may include procedures for the management plane configuration. For specific details of a start-up procedure, FIG. 4C described above may be referred to.

According to an embodiment, in operation 615, the RU 220 may transmit configuration information. For example, the RU 220 may transmit, to the DU 210, a management plane message including the configuration information requesting a spectrum for CBRS (or a CBRS spectrum), based on the start-up procedure. For example, the management plane message including the configuration information may be transmitted in an operation of configuring a CBRS optional parameter within the start-up procedure. For example, the configuration information may be delivered to the CBSD manager 405 through the DU 210.

In FIG. 6, an example in which exchange (or transmission) of a CBRS YANG parameter and exchange (or transmission) of the CBRS optional parameter including the configuration information are performed with the DU 210 within the start-up procedure is illustrated, but an embodiment of the present disclosure is not limited thereto. For example, the exchange (or the transmission) of the CBRS YANG parameter and the exchange (or the transmission) of the CBRS optional parameter may be directly performed with the CBSD manager 405.

According to an embodiment, the configuration information may include the second mode indicating that the RU 220 is moving on a path having a random pattern. For example, the second mode may represent a case that the flying path is the path having the random pattern, in a case that the RU 220 is moving on the flying path. For example, the random pattern may represent a path changed based on a service status of at least one UE provided with a service by the RU 220 or signal quality of the path. However, an embodiment of the present disclosure is not limited thereto. For example, the RU 220 may generate the configuration information including the second mode, in a case it is configured as the second mode by an operator. Alternatively, for example, the RU 220 may generate the configuration information including the second mode, according to determining that the flying path is the predetermined path by using artificial intelligence (AI)/machine learning (ML).

According to an embodiment, the configuration information may further include a present location of the RU 220 and a time (or a current time) in a case that the RU 220 is located on the present location. For example, the present location may include coordinates (e.g., latitude and longitude). For example, the time may include a synchronized time between the DU 210 and the RU 220. In other words, unlike the configuration information including (or indicating) the first mode of FIG. 5, the configuration information including (or indicating) the second mode may not include information exemplified in the Table 1. For example, the configuration information including the second mode may include, from among a mode, path information, a present location, and a time according to the present location, the mode, the present location, and the time according to the present location.

According to an embodiment, in operation 620, the CBSD manager 405 and the SAS 435 may allocate a spectrum. For example, the CBSD manager 405 receiving the configuration information may request allocation of a CBRS spectrum for an area including the present location of the path having the random pattern. For example, the SAS 435 may allocate the CBRS spectrum for the area in response to the request, and may transmit information on the allocated spectrum to the CBSD manager 405.

For example, in a case that the area is a first area, the SAS 435 may allocate a first spectrum (or a first CBRS spectrum) for the first area. However, this is only for convenience of description, and a plurality of spectrums may also be allocated for the area including the present location. For example, the first spectrum may be used for the first area during a first time interval. For example, the first time interval may be determined based on the time according to the present location. Alternatively, for example, the first time interval may also be determined based on the time according to the present location and an expected moving path on the flying path of the RU 220.

Referring to the above, the CBSD manager 405 and the SAS 435 may allocate a spectrum for the present location of the RU 220 based on the configuration information including the present location. In other words, unlike the example 500 of FIG. 5 in which spectrums (or frequencies) are pre-assigned for areas to which the RU 220 is to move, in the example 600 of FIG. 6, only the first spectrum for the first area including the present location may be allocated.

According to an embodiment, after the CBSD manager 405 and the SAS 435 allocate the spectrum in the operation 620, the CBSD manager 405 may configure an absolute radio frequency channel number (ARFCN) (or an E-UTRA ARFCN (EARFCN)) and a grant expire time.

According to an embodiment, in operation 625, the CBSD manager 405 may transmit information on a cell according to the spectrum. For example, the CBSD manager 405 may transmit the information on the cell according to the spectrum to the DU 210 and/or the RU 220. As in the above-described example, the CBSD manager 405 may transmit information on a first cell according to the first spectrum to the DU 210. For example, the information on the first cell according to the first spectrum may be transmitted to the RU 220 through the DU 210. Alternatively, for example, the information on the first cell according to the first spectrum may also be directly transmitted from the CBSD manager 405 to the RU 220.

According to an embodiment, the DU 210 may perform unlock of a cell and may start transmission (or communication or reception). For example, the DU 210 may unlock a pre-assigned cell of an area in which the RU 220 is located according to movement of the RU 220, and may start the transmission.

According to an embodiment, in operation 630, the RU 220 may perform communication. For example, the RU 220 may perform communication in the unlocked cell. For example, the RU 220 may perform communication with at least one UE on a cell according to a CBRS spectrum allocated for an area in which the RU 220 is currently located. For example, in a case that a present location of the RU 220 is the first area, the RU 220 may perform communication with the at least one UE on the first cell according to the first spectrum.

According to an embodiment, the RU 220 may transmit a heartbeat message for a grant while performing the communication. For example, the RU 220 may periodically transmit the heartbeat message for confirming a grant for a CBRS spectrum. For example, the RU 220 may periodically transmit the heartbeat message for the first spectrum on the first cell.

According to an embodiment, in operation 635, the RU 220 may move. For example, the RU 220 may move from the first area that is the present location to a second area. For example, the RU 220 may recognize (or detect) a change from the first area to the second area based on monitoring.

According to an embodiment, the RU 220 may perform the monitoring for the cell according to the CBRS spectrum while performing the communication. For example, the RU 220 may continuously monitor a service link status in terms of user quality (or signal quality) of a service provided by the RU 220 and/or location change. For example, the RU 220 may determine whether the RU 220 is located within a designated distance from a boundary of the first area based on a result of the monitoring. For example, in a case that the RU 220 is located within the designated distance from the boundary of the first area (and/or in a case that the RU 220 is approaching the boundary), the RU 220 may detect the change from the first area to the second area.

According to an embodiment, in operation 640, the RU 220 may transmit notification information. For example, in a case that the RU 220 detects the change from the first area to the second area based on a result of the monitoring for the first cell, the RU 220 may transmit, to the DU 210, a management plane message including the notification information. For example, the notification information may be delivered to the CBSD manager 405 through the DU 210. However, an embodiment of the present disclosure is not limited thereto. For example, the RU 220 may also directly transmit the notification information to the CBSD manager 405.

According to an embodiment, the notification information may include an identifier of the second area in which the RU 220 is to be located, coordinates indicating the second area, and a starting time of the RU 220 for the second area. For specific details of the notification information, the Table 2 described above may be referred to.

According to an embodiment, in operation 645, the CBSD manager 405 and the SAS 435 may allocate a spectrum. For example, the CBSD manager 405 receiving the notification information may request allocation of a CBRS spectrum to the second area. For example, the SAS 435 may allocate the CBRS spectrum for the second area in response to the request, and may transmit information on the allocated spectrum to the CBSD manager 405.

For example, the SAS 435 may allocate a second spectrum (or a second CBRS spectrum) for the second area. For example, the second spectrum may be used for the second area during a second time interval. For example, the second time interval may be determined based on the starting time of the RU 220 for the second area.

According to an embodiment, in operation 650, the CBSD manager 405 may transmit information on a cell according to a spectrum. For example, the CBSD manager 405 may transmit the information on the cell according to the spectrum to the DU 210 and/or the RU 220. As in the above-described example, the CBSD manager 405 may transmit information on a second cell according to the second spectrum to the DU 210. For example, the information on the second cell according to the second spectrum may be transmitted to the RU 220 through the DU 210. Alternatively, for example, the information on the second cell according to the second spectrum may also be directly transmitted from the CBSD manager 405 to the RU 220.

According to an embodiment, the DU 210 may perform unlock of a cell and may start transmission (or communication or reception). For example, the DU 210 may unlock a pre-assigned cell of an area in which the RU 220 is located according to movement of the RU 220, and may start the transmission.

According to an embodiment, in operation 655, the RU 220 may perform communication. For example, the RU 220 may perform communication in the unlocked cell. For example, as the RU 220 enters into the second area, the RU 220 may perform communication with at least one UE on a cell according to the allocated CBRS spectrum. For example, in a case that an area into which the RU 220 enters is the second area, the RU 220 may perform communication with the at least one UE on the second cell according to the second spectrum.

In the example 600 of FIG. 6, a case that a result of the monitoring indicates location change of the RU 220 is illustrated, but an embodiment of the present disclosure is not limited thereto. For example, the RU 220 may determine whether quality of a service (or service quality or user quality) provided by the RU 220 at the present location is less than reference quality, regardless of the movement of the RU 220, based on the result of the monitoring. In an example in which the present location is the first area, the RU 220 may determine whether the service quality on the first cell is less than the reference quality. Accordingly, the RU 220 may transmit the notification information for requesting a CBRS spectrum (e.g., a third spectrum) different from the first spectrum on the first cell.

Although not illustrated in the example 600 of FIG. 6, in a case that the RU 220 recognizes that the CBRS spectrum is not available on the cell according to the CBRS spectrum, the RU 220 may stop communication. For example, in a case that the RU 220 recognizes that an available time (or a time interval) of the CBRS spectrum expires, the RU 220 may stop the communication and may release the grant. Thereafter, the SAS 435 and the CBSD manager 405 may perform CBSD data synchronization.

Referring to the above, a device, a method, and a storage medium according to embodiments of the present disclosure may allocate a CBRS spectrum for an area to be moved within the flying path (e.g., the path having the random pattern) of the RU 220 in real time by using the notification information provided in the operation 640. Accordingly, the device, the method, and the storage medium according to embodiments of the present disclosure may relatively reduce service interruption or a probability of the service interruption that may occur as the RU 220 moves on the flying path, and may provide a seamless service.

Referring to FIG. 5 and FIG. 6, the device, the method, and the storage medium according to embodiments of the present disclosure may also be applied in a case that a mode of the RU 220 is changed from the first mode to the second mode. For example, according to the example 500 of FIG. 5, the RU 220 may move on the flying path having the predetermined path and may be allocated CBRS spectrums for areas on the predetermined path. Thereafter, the RU 220 may change the mode from the first mode to the second mode. Thereafter, the RU 220 may be allocated a CBRS spectrum for a present location according to the second mode. In addition, the RU 220 of the second mode may be allocated a CBRS spectrum for a location to be changed whenever a location is changed.

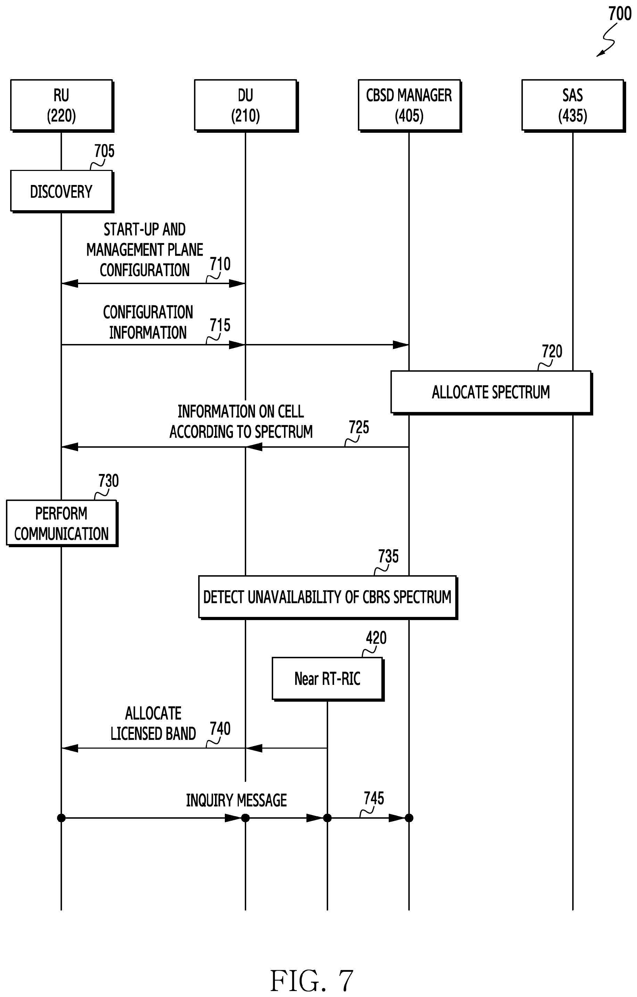

FIG. 7 illustrates an example of a signal flow for a method for allocating a licensed band to an RU, in a case that a license-exempted spectrum is not available.

FIG. 7 illustrates an example 700 of a method for allocating the licensed band to an RU 220, in a case that the allocated license-exempted spectrum (e.g., a CBRS spectrum) is not available while the RU 220 is moving on the flying path. For example, the RU 220 of FIG. 7 may be an example of the RU 220 of FIG. 2A or the O-RU 253-1 of FIG. 2B. For example, a DU 210 of FIG. 7 may be an example of the DU 210 of FIG. 2A or the O-DU 251 of FIG. 2B. For example, a CBSD manager 405 of FIG. 7 may be an example of the CBSD manager 405 of FIG. 4A. For example, an SAS 435 of FIG. 7 may be an example of the SAS 435 of FIG. 4B. For example, a Near-RT RIC 420 of FIG. 7 may be an example of the Near-RT RIC 420 of FIG. 4A.

According to an embodiment, in operation 705, the RU 220 may perform a discovery. For example, the RU 220 may perform the discovery for a DU to be connected to the RU 220. The discovery may include RU identification in a dynamic host configuration protocol (DHCP), a management plane VLAN discovery, an RU management plane IP address assignment, and an RU controller discovery.

According to an embodiment, in operation 710, the RU 220 and the DU 210 may perform start-up and management plane configuration. For example, the start-up may include procedures for the management plane configuration. For specific details of a start-up procedure, FIG. 4C described above may be referred to.

According to an embodiment, in operation 715, the RU 220 may transmit configuration information. For example, the RU 220 may transmit, to the DU 210, a management plane message including the configuration information requesting a spectrum for CBRS (or a CBRS spectrum), based on the start-up procedure. For example, the management plane message including the configuration information may be transmitted in an operation of configuring a CBRS optional parameter within the start-up procedure. For example, the configuration information may be delivered to the CBSD manager 405 through the DU 210.

In FIG. 7, an example in which exchange (or transmission) of a CBRS YANG parameter and exchange (or transmission) of the CBRS optional parameter including the configuration information are performed with the DU 210 within the start-up procedure is illustrated, but an embodiment of the present disclosure is not limited thereto. For example, the exchange (or the transmission) of the CBRS YANG parameter and the exchange (or the transmission) of the CBRS optional parameter may be directly performed with the CBSD manager 405.

According to an embodiment, the configuration information may include a mode of the flying path on which the RU 220 is moving. For example, the mode may include the first mode indicating that the RU 220 is moving on a predetermined path and the second mode indicating that the RU 220 is moving on a path having a random pattern.

According to an embodiment, the configuration information may further include a present location of the RU 220 and a time (or a current time) in a case that the RU 220 is located on the present location.

According to an embodiment, in operation 720, the CBSD manager 405 and the SAS 435 may allocate a spectrum. For example, the CBSD manager 405 receiving the configuration information including the first mode may request allocation of a CBRS spectrum for each of the areas in the predetermined path. For example, the SAS 435 may allocate the CBRS spectrum for each of the areas in the predetermined path in response to the request, and may transmit information on allocated spectrums to the CBSD manager 405. Alternatively, for example, the CBSD manager 405 receiving the configuration information including the second mode may request allocation of a CBRS spectrum for an area including the present location of the path having the random pattern. For example, the SAS 435 may allocate the CBRS spectrum for the area including the present location in response to the request, and may transmit information on the allocated spectrum to the CBSD manager 405.

According to an embodiment, after the CBSD manager 405 and the SAS 435 allocate the spectrum in the operation 720, the CBSD manager 405 may configure an absolute radio frequency channel number (ARFCN) (or an E-UTRA ARFCN (EARFCN)) and a grant expire time.

According to an embodiment, in operation 725, the CBSD manager 405 may transmit information on a cell according to the spectrum. For example, the CBSD manager 405 may transmit the information on the cell according to the spectrum to the DU 210 and/or the RU 220.

For example, in a case that the areas in the predetermined path according to the first mode include a first area and a second area, the CBSD manager 405 may transmit information on a first cell according to a first spectrum for the first area and information on a second cell according to a second spectrum for the second area to the DU 210. For example, the information on the first cell according to the first spectrum and the information on the second cell according to the second spectrum may be transmitted to the RU 220 through the DU 210. Alternatively, for example, the information on the first cell according to the first spectrum and the information on the second cell according to the second spectrum may also be directly transmitted from the CBSD manager 405 to the RU 220.

Alternatively, for example, in a case that the area including the present location according to the second mode includes the first area, the CBSD manager 405 may transmit information on the first cell according to the first spectrum for the first area to the DU 210. For example, the information on the first cell according to the first spectrum may be transmitted to the RU 220 through the DU 210. Alternatively, for example, the information on the first cell according to the first spectrum may also be directly transmitted from the CBSD manager 405 to the RU 220.

According to an embodiment, the DU 210 may perform unlock of a cell and may start transmission (or communication or reception). For example, the DU 210 may unlock a pre-assigned cell of an area in which the RU 220 is located according to movement of the RU 220, and may start the transmission.

According to an embodiment, in operation 730, the RU 220 may perform communication. For example, the RU 220 may perform communication in the unlocked cell. For example, the RU 220 may perform communication with at least one UE on a cell according to a CBRS spectrum allocated for an area in which the RU 220 is currently located. For example, in a case that a present location of the RU 220 is the first area, the RU 220 may perform communication with the at least one UE on the first cell according to the first spectrum.

According to an embodiment, the RU 220 may transmit a heartbeat message for a grant while performing the communication. For example, the RU 220 may periodically transmit the heartbeat message for confirming a grant for a CBRS spectrum. For example, the RU 220 may periodically transmit the heartbeat message for the first spectrum on the first cell.

According to an embodiment, in operation 735, the DU 210 and/or the CBSD manager 405 may detect unavailability of the CBRS spectrum. For example, the DU 210 (and/or the CBSD manager 405) may detect the unavailability of the CBRS spectrum based on receiving, from the SAS 435, a signal indicating that the allocated CBSD spectrum is not granted. Alternatively, for example, the DU 210 (and/or the CBSD manager 405) may detect the unavailability of the CBRS spectrum based on recognizing that communication cannot be performed through the allocated CBSD spectrum (or disconnection of the communication). Alternatively, for example, the DU 210 (and/or the CBSD manager 405) may detect the unavailability of the CBRS spectrum based on receiving, from the RU 220, a signal indicating that communication cannot be performed through the allocated CBSD spectrum (or the disconnection of the communication).

In a case that the CBRS spectrum is not available, one or more RUs including the RU 220 connected to the DU 210 need to use a licensed band. In other words, in a case that the CBRS spectrum is temporarily not available, use of the licensed band may be enforced for the one or more RUs.

According to an embodiment, the DU 210 and/or the CBSD manager 405 may request allocation of the licensed band from the Near-RT RIC 420 in response to detecting the unavailability of the CBRS spectrum. However, an embodiment of the present disclosure is not limited thereto. For example, the DU 210 and/or the CBSD manager 405 may request allocation of a licensed band from a device (or a node or an entity) managing the allocation of the licensed band in response to detecting the unavailability of the CBRS spectrum.

In the example 700 of FIG. 7, an example in which the DU 210 and/or the CBSD manager 405 detects the unavailability of the CBRS spectrum is illustrated, but an embodiment of the present disclosure is not limited thereto. The RU 220, not the DU 210 and/or the CBSD manager 405, may directly detect the unavailability of the CBRS spectrum and may request the allocation of the licensed band from the Near-RT RIC 420.

According to an embodiment, in operation 740, the Near-RT RIC 420 may allocate the licensed band. For example, the Near-RT RIC 420 may transmit information on the allocated licensed band to the DU 210 and/or the RU 220. For example, the information on the licensed band may include information on a third cell according to the licensed band.

According to an embodiment, the DU 210 may perform unlock of a cell according to the licensed band (e.g., the third cell) and may start transmission (or communication or reception). For example, the DU 210 may unlock a pre-assigned cell of an area in which the RU 220 is located according to movement of the RU 220, and may start the transmission.

Although not illustrated in FIG. 7, the RU 220 may perform communication on the third cell according to the licensed band. For example, the RU 220 may perform communication with at least one UE on the third cell.

According to an embodiment, in operation 745, the RU 220, the DU 210, and/or the Near-RT RIC 420 may transmit an inquiry message to the SAS 435. For example, the RU 220 (and/or the DU 210 and the Near-RT RIC 420) may transmit the inquiry message for confirming availability of a CBRS spectrum to the CBSD manager 405. The CBSD manager 405 receiving the inquiry message may request allocation for the CBRS spectrum from the SAS 435.

According to an embodiment, the inquiry message may be periodically transmitted. For example, the RU 220 (and/or the DU 210 and the Near-RT RIC 420) may periodically transmit the inquiry message for confirming the availability of the CBRS spectrum and requesting the allocation. For example, a period of the inquiry message may be determined based on a timer having a designated time interval.

According to an embodiment, the inquiry message may be transmitted based on a statistical model. For example, the RU 220 (and/or the DU 210 and the Near-RT RIC 420) may transmit the inquiry message generated based on the statistical model trained by using historical information including a location of the RU 220 and a CBRS spectrum used according to the location. For example, the statistical model may include an artificial intelligence model. For example, the RU 220 (and/or the DU 210 and the Near-RT RIC 420) may identify the CBRS spectrum used in the past according to the location of the RU 220 based on the statistical model trained by using the historical information, and may transmit, to the CBSD manager 405, the inquiry message requesting allocation for the identified CBRS spectrum.

Referring to the above, since the licensed band is allocated according to the operation 740, the Near-RT RIC 420 controlling the DU 210 and the RU 220 for the licensed band may request the allocation of the CBRS spectrum from the SAS 435 through the CBSD manager 405.

In FIG. 7, the example 700 in a case that the license-exempted spectrum is not available after the license-exempted spectrum (e.g., the CBRS spectrum) is allocated in the operation 720 is illustrated, but an embodiment of the present disclosure is not limited thereto. For example, in a case that the CBSD manager 405 requests allocation of a spectrum from the SAS 435 based on the configuration information, the SAS 435 may notify the CBSD manager 405 (and/or the DU 210) that the allocation is impossible. The DU 210 (and/or the CBSD manager 405) recognizing that the allocation is impossible may request the Near-RT RIC 420 to allocate the licensed band.

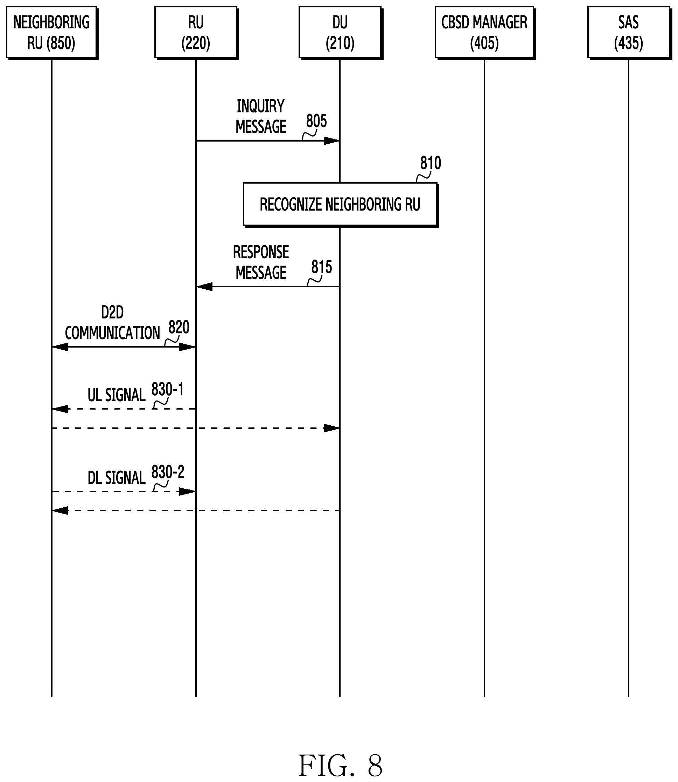

FIG. 8 illustrates an example of a signal flow for a method in which an RU maintains communication with a DU through device to device (D2D) communication.

FIG. 8 illustrates an example 800 of a method in which an RU 220 maintains communication with a DU 210 for use of a CBRS spectrum through D2D communication with a neighboring RU 850, while the CBRS spectrum is allocated. For example, the RU 220 of FIG. 8 may be an example of the RU 220 of FIG. 2A or the O-RU 253-1 of FIG. 2B. For example, the DU 210 of FIG. 8 may be an example of the DU 210 of FIG. 2A or the O-DU 251 of FIG. 2B. For example, a CBSD manager 405 of FIG. 8 may be an example of the CBSD manager 405 of FIG. 4A. For example, an SAS 435 of FIG. 8 may be an example of the SAS 435 of FIG. 4B.

Although not illustrated in the example 800 of FIG. 8, according to an embodiment, before operation 805, a CBRS spectrum may be allocated. For example, before the operation 805, it may be in a status in which the CBRS spectrum is allocated based on the operation 505 to the operation 525 of FIG. 5 (or the operation 605 to the operation 625 of FIG. 6 or the operation 705 to the operation 725 of FIG. 7).

According to an embodiment, the RU 220 may perform communication with at least one UE on a cell according to the allocated CBRS spectrum. While performing the communication, the RU 220 may move. For example, the RU 220 may move through areas on a flying path. In this case, as the RU 220 moves through the areas on the flying path, the RU 220 may deviate from a service area provided by the DU 210. For example, the service area may represent a virtual area in which the DU 210 may support a service for at least one RU with which communication is established (or connected). Accordingly, in a case that the RU 220 deviates from the service area, the RU 220 may maintain the communication established with the DU 210 by performing D2D communication with an RU (e.g., the neighboring RU 850) in the service area.

According to an embodiment, the RU 220 may transmit a request message to the DU 210. For example, as the RU 220 recognizes that there is no DU connectable in an area to be changed according to movement from an area of a present location of the RU 220, the RU 220 may transmit the request message to the DU 210 currently connected. For example, the RU 220 may transmit, to the DU 210, the request message for performing (or establishing) the D2D communication. In this case, the RU 220 may be located in the service area of the DU 210. For example, the request message may be used for requesting the RU 220 to establish a connection with an RU in the service area.

According to an embodiment, the request message may include the present location of the RU 220. For example, the request message may include an identifier and coordinates (e.g., latitude and longitude) indicating an area corresponding to the present location in the service area, from among areas of the flying path of the RU 220.

According to an embodiment, in operation 810, the DU 210 may recognize the neighboring RU 850. For example, the DU 210 may recognize the neighboring RU 850 based on the present location of the request message. For example, the DU 210 may recognize locations of a plurality of RUs connected to the DU 210 in the service area. The plurality of RUs may include the RU 220 and the neighboring RU 850. For example, the DU 210 may recognize the neighboring RU 850 by using the present location of the request message received from the RU 220 and the locations of the plurality of RUs. According to an embodiment, the DU 210 may determine an RU closest to the present location from among the plurality of RUs as the neighboring RU 850. However, an embodiment of the present disclosure is not limited thereto. For example, the DU 210 may determine the neighboring RU 850 from among the plurality of RUs in consideration of service requirements such as location and communication quality.

Although not illustrated in the example 800 of FIG. 8, according to an embodiment, the DU 210 may inquire of the determined neighboring RU 850 whether to grant (or accept) the D2D communication requested from the RU 220. The DU 210 may receive a response to the inquiry from the neighboring RU 850. For example, the response may indicate that the neighboring RU 850 grants (or accepts) the D2D communication. However, an embodiment of the present disclosure is not limited thereto. For example, in a case that the response indicates that the D2D communication is not granted (or rejected), the DU 210 may recognize another RU from among the plurality of RUs, and may inquire of the another RU whether to grant (or accept) the D2D communication requested from the RU 220.

According to an embodiment, in operation 815, the DU 210 may transmit a response message to the RU 220. For example, the DU 210 may transmit the response message to the RU 220 based on receiving the response indicating that the neighboring RU 850 grants (or accepts) the D2D communication. For example, the response message may include a key for the D2D communication. For example, the key may include authentication information used in the D2D communication.

According to an embodiment, in operation 820, the RU 220 and the neighboring RU 850 may establish the D2D communication. For example, the RU 220 may recognize the neighboring RU 850 by using the key received from the DU 210, and may attempt to establish the D2D communication with the recognized neighboring RU 850. For example, the D2D communication may be performed based on a PC5 interface for V2X. However, an embodiment of the present disclosure is not limited thereto.

According to an embodiment, in operation 830-1, the RU 220 may transmit an uplink signal (UL signal) to the DU 210 through the neighboring RU 850. Alternatively, according to an embodiment, in operation 830-2, the RU 220 may receive a downlink signal (DL signal) from the DU 210 through the neighboring RU 850.

For example, the RU 220 may maintain communication with the DU 210 by using the established D2D communication. For example, even if the RU 220 is located outside the service area of the DU 210 according to the movement, the RU 220 may maintain the communication with the DU 210 by using the D2D communication.

Referring to the above, the RU 220 implemented as a UAV may be used in a situation such as a natural disaster, as a connection between an RU connected through a wire and the DU 210 is disconnected. For example, it is assumed that a first DU provides a service to a first UAV RU and a second UAV RU, and a second DU provides a service to a third UAV RU. In this case, the first UAV RU may be located closer to the first DU than the second UAV RU, and the third UAV RU may be located closer to the second DU than the second UAV RU. In other words, the second UAV RU may be located between the first DU and the second DU, and the second UAV RU may be located between the first UAV RU and the third UAV RU.

In the example, in a case that the second UAV RU moves away from the first DU and becomes closer to the second DU within the service area of the DU, the second UAV RU may establish D2D communication with the first UAV RU and may maintain a connection with the first DU through the D2D communication. In addition, when the second UAV RU is located within the service area of the second DU, the second UAV RU may establish a connection with the second DU and then may establish D2D communication with the third UAV RU. The second UAV RU located relatively farther from the second DU than the third UAV RU may prevent service interruption and provide a seamless service by using the D2D communication established with the third UAV RU.

In FIG. 8, the example 800 of a method in which the DU 210 manages (or handles) the D2D communication is illustrated, but an embodiment of the present disclosure is not limited thereto. For example, the D2D communication may also be managed by a network entity different from the DU 210. For example, since the DU 210 or the network entity is an entity in which the RU 220 and the neighboring RU 850 are registered, security may be secured. In addition, for example, since the DU 210 or the network entity uses locations of the RU 220 and the neighboring RU 850 in determining the neighboring RU 850, communication performance (or connectivity) may be secured.

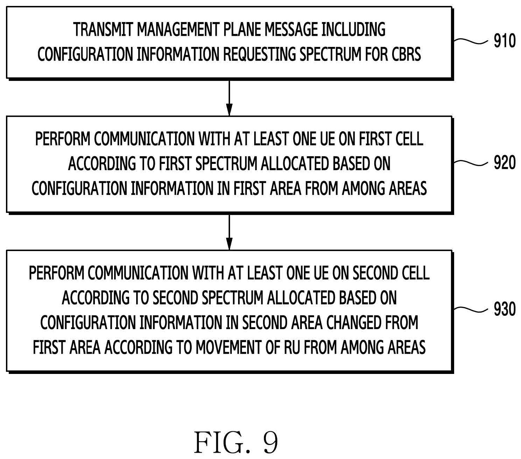

FIG. 9 illustrates an example of an operation flow for a method for performing communication through an allocated spectrum, while an RU is moving on a predetermined path.

At least a portion of the method of FIG. 9 may be performed by the RU 220 of FIG. 4A (or the RU 220 of FIG. 2A). For example, at least a portion of the method may be controlled by a processor 380 of the RU 220. In the following embodiment, each operation may be performed sequentially, but is not necessarily performed sequentially. For example, an order of each operation may be changed, and at least two operations may be performed in parallel.

According to an embodiment, in operation 910, the RU 220 may transmit a management plane message including configuration information requesting a spectrum for CBRS. For example, based on a start-up procedure with a DU (e.g., the DU 210 of FIG. 4A or the DU 210 of FIG. 2A), the RU 220 may transmit the management plane message including the configuration information to the DU.

According to an embodiment, the RU 220 may perform a discovery. For example, the RU 220 may perform the discovery for a DU to be connected to the RU 220. For example, the discovery may include RU identification in a dynamic host configuration protocol (DHCP), a management plane VLAN discovery, an RU management plane IP address assignment, and an RU controller discovery.

According to an embodiment, the RU 220 and the DU 210 may perform the start-up and management plane configuration. For example, the start-up may include procedures for the management plane configuration. For specific details of the start-up procedure, FIG. 4C described above may be referred to. For example, the management plane message including the configuration information may be transmitted in an operation of configuring a CBRS optional parameter within the start-up procedure. For example, the configuration information may be delivered to a CBSD manager 405 through the DU 210. However, an embodiment of the present disclosure is not limited thereto. For example, the RU 220 may also directly transmit the configuration information to the CBSD manager 405.

According to an embodiment, the configuration information may include the first mode indicating that the RU 220 is moving on a predetermined path. For example, the first mode may represent a case that the flying path is the predetermined path, in a case that the RU 220 is moving on the flying path. For example, the RU 220 may generate the configuration information including the first mode, in a case that the RU 220 is configured as the first mode by an operator. Alternatively, for example, the RU 220 may generate the configuration information including the first mode, based on determining that the flying path is the predetermined path by using artificial intelligence (AI)/machine learning (ML).

According to an embodiment, the configuration information may include path information for each of areas of the predetermined path. For example, the predetermined path may include the areas. For example, the configuration information may include a set of the path information corresponding to each of the areas. For example, the path information may include an identifier of a corresponding area from among the areas, coordinates indicating the corresponding area, and an expected arrival time of the RU 220 for the corresponding area. For a specific example of the configuration information (or the path information), the Table 1 described above may be referred to.

According to an embodiment, the configuration information may further include a present location of the RU 220 and a time (or a current time) in a case that the RU 220 is located on the present location. For example, the present location may include coordinates (e.g., latitude and longitude). For example, the present location may be included in the areas of the predetermined path. For example, the time may include a synchronized time between the DU 210 and the RU 220.

According to an embodiment, the RU 220 may be allocated a spectrum from the CBSD manager 405 and an SAS 435. For example, the CBSD manager 405 receiving the configuration information from the RU 220 may request allocation of a CBRS spectrum for each of the areas in the predetermined path. For example, the SAS 435 may allocate the CBRS spectrum for each of the areas in response to the request, and may transmit information on allocated spectrums to the CBSD manager 405.

For example, in a case that the areas include a first area and a second area, the SAS 435 may allocate a first spectrum (or a first CBRS spectrum) for the first area and a second spectrum (or a second CBRS spectrum) for the second area. However, this is only for convenience of description, and in a case that the areas include three or more areas, three or more spectrums corresponding to the three or more areas may be allocated. For example, the first spectrum may be used for the first area during a first time interval. For example, the first time interval may be determined based on a first expected arrival time of the RU 220 for the first area. In addition, for example, the second spectrum may be used for the second area during a second time interval. For example, the second time interval may be determined based on a second expected arrival time of the RU 220 for the second area.

According to an embodiment, in operation 920, the RU 220 may perform communication with at least one UE on a first cell according to the first spectrum allocated based on the configuration information in the first area from among the areas. For example, in a case that a present location of the RU 220 is the first area on the predetermined path, the RU 220 may perform communication with the at least one UE on the first cell according to the first spectrum.

According to an embodiment, the RU 220 may perform the monitoring for the cell according to the CBRS spectrum while performing the communication. For example, the RU 220 may determine whether the RU 220 is located within a designated distance from a boundary of the first area based on a result of the monitoring. For example, in a case that the RU 220 is located within the designated distance from the boundary of the first area (and/or in a case that the RU 220 is approaching the boundary), the RU 220 may detect the change from the first area to the second area.

According to an embodiment, in operation 930, the RU 220 may perform communication with at least one UE on a second cell according to the second spectrum allocated based on the configuration information in the second area changed from the first area according to movement of the RU 220, from among the areas. For example, in a case that the present location of the RU 220 changed according to the movement is the second area on the predetermined path, the RU 220 may perform communication with the at least one UE on the second cell according to the second spectrum.

According to an embodiment, the RU 220 may perform the monitoring for the cell according to the CBRS spectrum while performing the communication. For example, the RU 220 may determine whether the RU 220 is located within a designated distance from a boundary of the second area based on a result of the monitoring. For example, in a case that the RU 220 is located within the designated distance from the boundary of the second area (and/or in a case that the RU 220 is approaching the boundary), the RU 220 may detect a change from the second area to a third area. In this case, the third area may be an area (or an area not included in the areas) different from the areas in the predetermined path.

According to an embodiment, the RU 220 may transmit notification information. For example, in a case that the RU 220 detects the change from the second area to the third area based on a result of the monitoring for the second cell, the RU 220 may transmit, to the DU 210, a management plane message including the notification information. For example, the notification information may be delivered to the CBSD manager 405 through the DU 210. However, an embodiment of the present disclosure is not limited thereto. For example, the RU 220 may also directly transmit the notification information to the CBSD manager 405.

According to an embodiment, the notification information may include an identifier of the third area in which the RU 220 is to be located, coordinates indicating the third area, and a starting time of the RU 220 for the third area. For an example of the notification information, the Table 2 described above may be referred to.

In addition, a device, a method, and a storage medium according to embodiments of the present disclosure may also be applied in a case that the RU 220 of the first mode moves on a first predetermined path and then the first predetermined path is changed to a second predetermined path. For example, the RU 220 may move on the first predetermined path and may be allocated a first set of CBRS spectrums for a first set of areas on the first predetermined path. Thereafter, as the flying path is changed from the first predetermined path to the second predetermined path, the RU 220 may move on a flying path having the second predetermined path and may be allocated a second set of CBRS spectrums for a second set of areas on the second predetermined path. As an example, the second predetermined path may include a path (or a return path) defined from the present location of the RU 220 to a location of the DU 210.

In addition, the device, the method, and the storage medium according to embodiments of the present disclosure may also be applied in a case that a mode of the RU 220 is changed from the first mode to the second mode. For example, the RU 220 may move on a flying path having a predetermined path and may be allocated CBRS spectrums for areas on the predetermined path. Thereafter, the RU 220 may change the mode from the first mode to the second mode. Thereafter, the RU 220 may be allocated a CBRS spectrum for a present location according to the second mode. In addition, the RU 220 of the second mode may be allocated a CBRS spectrum for a location to be changed whenever a location is changed.

The device, the method, and the storage medium according to embodiments of the present disclosure may effectively allocate a CBRS spectrum on the flying path to the RU 220 by providing configuration information for the flying path of the RU 220 to the DU 210 (or a CBSD manager), in a case that the RU 220 implemented as the moving body requests allocation of the CBRS spectrum. Accordingly, the RU 220 may provide a service having relatively high quality by performing communication with the at least one UE provided with a service on a cell according to the CBRS spectrum allocated to the RU 220.

The effects that can be obtained from the present disclosure are not limited to those described above, and any other effects not mentioned herein will be clearly understood by those having ordinary knowledge in the art to which the present disclosure belongs, from the following description.

As described above, a radio unit (RU) may comprise memory storing instructions. The RU may comprise a transceiver. The RU may comprise at least one processor. The instructions, when executed by the at least one processor individually or collectively, may cause the RU to, based on a start-up procedure with a distributed unit (DU), transmit, to the DU, a management plane message including configuration information requesting a spectrum for citizens broadband radio service (CBRS). The configuration information may include a mode in which the RU is moving on a predetermined path and path information for each of areas of the predetermined path. The instructions, when executed by the at least one processor individually or collectively, may cause the RU to perform communication with at least one user equipment (UE) on a first cell according to a first spectrum allocated based on the configuration information in a first area from among the areas. The instructions, when executed by the at least one processor individually or collectively, may cause the RU to perform communication with at least one UE on a second cell according to a second spectrum allocated based on the configuration information in a second area changed from the first area according to moving of the RU from among the areas.

According to an embodiment, the path information may include an identifier of an area from among the areas, coordinates indicating the area, and an expected arrival time for the area.

According to an embodiment, the configuration information may further include a present location of the RU and a time in a case that the RU is located on the present location.

According to an embodiment, the instructions, when executed by the at least one processor individually or collectively, may cause the RU to perform a discovery for the DU. The instructions, when executed by the at least one processor individually or collectively, may cause the RU to perform the start-up procedure for management plane configuration with the discovered DU. The configuration information may be provided through configuring optional parameters of an RU supporting the CBRS in the start-up procedure.

According to an embodiment, the instructions, when executed by the at least one processor individually or collectively, may cause the RU to receive, from the DU, information on the first cell allocated with respect to the first area where the RU is located. The instructions, when executed by the at least one processor individually or collectively, may cause the RU to perform the at least one UE on the first cell in response to receiving the information on the first cell. The first cell may be unlocked by the DU based on that the first spectrum is allocated.

According to an embodiment, the spectrum for the CBRS may include the first spectrum and the second spectrum. The spectrum for the CBRS may be allocated by a spectrum access system (SAS) according to a request of a citizens broadband radio service device (CBSD) manager with respect to the areas.

According to an embodiment, the instructions, when executed by the at least one processor individually or collectively, may cause the RU to perform monitoring for a status of a service link associated with the second cell while performing the communication with the at least one UE on the second cell. The instructions, when executed by the at least one processor individually or collectively, may cause the RU to transmit, to the DU, a management plane message including notification information used for requesting a change of the spectrum for the CBRS based on a result of the monitoring. The notification information may include an identifier of a third area changed from the second area, coordinates indicating the third area, and an expected arrival time for the third area.

According to an embodiment, the management plane message including the notification information may be transmitted based on that the RU is located within a reference distance from a boundary of the second area or based on the result representing that signal quality according to the second spectrum is less than reference quality.

According to an embodiment, the instructions, when executed by the at least one processor individually or collectively, may cause the RU to transmit, to the DU, a management plane message including another configuration information requesting the spectrum for the CBRS. The another configuration information may include another mode in which the RU is moving on a path having a random pattern. The instructions, when executed by the at least one processor individually or collectively, may cause the RU to perform monitoring while performing the communication with the at least one UE on the second cell. The instructions, when executed by the at least one processor individually or collectively, may cause the RU to transmit, to the DU, a management plane message including notification information used for requesting a change of the spectrum for the CBRS in response to recognizing that the RU is located within a reference distance from a boundary of the second area based on a result of the monitoring.

According to an embodiment, the instructions, when executed by the at least one processor individually or collectively, may cause the RU to perform communication with at least one user equipment (UE) on a third cell according to a licensed spectrum allocated by a near-real time radio access network (RAN) intelligent controller (Near-RT RIC) connected to the RU, after performing the communication with the at least one UE on the second cell according to the second spectrum. The third cell may be allocated in response to detecting that the second cell according to the second spectrum in the second area is not available by the DU or a CBSD manager.

According to an embodiment, the instructions, when executed by the at least one processor individually or collectively, may cause the RU to transmit, to the CBSD manager via the DU, an inquiry message for using the spectrum for the CBRS. The inquiry message may be periodically transmitted according to a designated time interval or may be transmitted based on a statistical model learned by using historical information including a location of the RU and a spectrum used according to the position.

According to an embodiment, the instructions, when executed by the at least one processor individually or collectively, may cause the RU to transmit, to the DU, a request message for performing device to device (D2D) communication. The instructions, when executed by the at least one processor individually or collectively, may cause the RU to receive a response message including a key for the D2D communication with a neighboring RU recognized by the DU. The instructions, when executed by the at least one processor individually or collectively, may cause the RU to maintain communication with the RU and the DU through the D2D communication established with the neighboring RU based on the key.

According to an embodiment, the instructions, when executed by the at least one processor individually or collectively, may cause the RU to transmit, to the DU, a management plane message including another configuration information requesting the spectrum for the CBRS. The another configuration information may include the mode in which the RU is moving on another predetermined path and path information for each of other areas of the another predetermined path. The instructions, when executed by the at least one processor individually or collectively, may cause the RU to perform communication with at least one user equipment (UE) on a third cell according to a third spectrum allocated based on the another configuration information in a third area from among the other areas. The instructions, when executed by the at least one processor individually or collectively, may cause the RU to perform communication with at least one UE on a fourth cell according to a fourth spectrum allocated based on the another configuration information in a fourth area changed from the third area according to moving of the RU from among the other areas.

According to an embodiment, the RU may include a moving body on the predetermined path or a path having a random pattern. The RU may include a RU providing the CBRS.

As described above, a method performed by a radio unit (RU) may comprise, based on a start-up procedure with a distributed unit (DU), transmitting, to the DU, a management plane message including configuration information requesting a spectrum for citizens broadband radio service (CBRS). The configuration information may include a mode in which the RU is moving on a predetermined path and path information for each of areas of the predetermined path. The method may comprise performing communication with at least one user equipment (UE) on a first cell according to a first spectrum allocated based on the configuration information in a first area from among the areas. The method may comprise performing communication with at least one UE on a second cell according to a second spectrum allocated based on the configuration information in a second area changed from the first area according to moving of the RU from among the areas.

According to an embodiment, the path information may include an identifier of an area from among the areas, coordinates indicating the area, and an expected arrival time for the area.

According to an embodiment, the configuration information may further include a present location of the RU and a time in a case that the RU is located on the present location.

According to an embodiment, the method may comprise performing a discovery for the DU. The method may comprise performing the start-up procedure for management plane configuration with the discovered DU. The configuration information may be provided through configuring optional parameters of an RU supporting the CBRS in the start-up procedure.

According to an embodiment, the method may comprise receiving, from the DU, information on the first cell allocated with respect to the first area where the RU is located. The method may comprise performing the at least one UE on the first cell in response to receiving the information on the first cell. The first cell may be unlocked by the DU based on that the first spectrum is allocated.

As described above, a non-transitory computer-readable storage medium, when executed by at least one processor of a radio unit (RU) comprising a transceiver individually or collectively, may store one or more programs including instructions that cause the RU to, based on a start-up procedure with a distributed unit (DU), transmit, to the DU, a management plane message including configuration information requesting a spectrum for citizens broadband radio service (CBRS). The configuration information may include a mode in which the RU is moving on a predetermined path and path information for each of areas of the predetermined path. The non-transitory computer-readable storage medium, when executed by the at least one processor individually or collectively, may store one or more programs including instructions that cause the RU to perform communication with at least one user equipment (UE) on a first cell according to a first spectrum allocated based on the configuration information in a first area from among the areas. The non-transitory computer-readable storage medium, when executed by the at least one processor individually or collectively, may store one or more programs including instructions that cause the RU to perform communication with at least one UE on a second cell according to a second spectrum allocated based on the configuration information in a second area changed from the first area according to moving of the RU from among the areas.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, an optical storage device (e.g., a compact disc-ROM (CD-ROM), digital versatile discs (DVDs), or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

## Claims

1. A radio unit (RU) comprising:
memory storing instructions;
a transceiver; and
at least one processor,
wherein the instructions, when executed by the at least one processor individually or collectively, cause the RU to:
based on a start-up procedure with a distributed unit (DU), transmit, to the DU, a management plane message including configuration information requesting a spectrum for citizens broadband radio service (CBRS), wherein the configuration information includes a mode in which the RU is moving on a predetermined path and path information for each of areas of the predetermined path;
perform communication with at least one user equipment (UE) on a first cell according to a first spectrum allocated based on the configuration information in a first area from among the areas; and
perform communication with at least one UE on a second cell according to a second spectrum allocated based on the configuration information in a second area changed from the first area according to moving of the RU from among the areas.

2. The RU of claim 1,
wherein the path information includes:
an identifier of an area from among the areas;
coordinates indicating the area; and
an expected arrival time for the area.

3. The RU of claim 2,
wherein the configuration information further includes a present location of the RU and a time in a case that the RU is located on the present location.

4. The RU of claim 1,
wherein the instructions, when executed by the at least one processor individually or collectively, cause the RU to:
perform a discovery for the DU; and
perform the start-up procedure for management plane configuration with the discovered DU, and
wherein the configuration information is provided through configuring optional parameters of an RU supporting the CBRS in the start-up procedure.

5. The RU of claim 4,
wherein the instructions, when executed by the at least one processor individually or collectively, cause the RU to:
receive, from the DU, information on the first cell allocated with respect to the first area where the RU is located; and
perform the at least one UE on the first cell in response to receiving the information on the first cell, and
wherein the first cell is unlocked by the DU based on that the first spectrum is allocated.

6. The RU of claim 1,
wherein the spectrum for the CBRS includes the first spectrum and the second spectrum, and
wherein the spectrum for the CBRS is allocated by a spectrum access system (SAS) according to a request of a citizens broadband radio service device (CBSD) manager with respect to the areas.

7. The RU of claim 1,
wherein the instructions, when executed by the at least one processor individually or collectively, cause the RU to:
perform monitoring for a status of a service link associated with the second cell while performing the communication with the at least one UE on the second cell; and
transmit, to the DU, a management plane message including notification information used for requesting a change of the spectrum for the CBRS based on a result of the monitoring,
wherein the notification information includes:
an identifier of a third area changed from the second area;
coordinates indicating the third area; and
an expected arrival time for the third area.

8. The RU of claim 7,
wherein the management plane message including the notification information is transmitted based on that the RU is located within a reference distance from a boundary of the second area or based on the result representing that signal quality according to the second spectrum is less than reference quality.

9. The RU of claim 1,
wherein the instructions, when executed by the at least one processor individually or collectively, cause the RU to:
transmit, to the DU, a management plane message including another configuration information requesting the spectrum for the CBRS, wherein the another configuration information includes another mode in which the RU is moving on a path having a random pattern;
perform monitoring while performing the communication with the at least one UE on the second cell; and
transmit, to the DU, a management plane message including notification information used for requesting a change of the spectrum for the CBRS in response to recognizing that the RU is located within a reference distance from a boundary of the second area based on a result of the monitoring.

10. The RU of claim 1,
wherein the instructions, when executed by the at least one processor individually or collectively, cause the RU to:
perform communication with at least one user equipment (UE) on a third cell according to a licensed spectrum allocated by a near-real time radio access network (RAN) intelligent controller (Near-RT RIC) connected to the RU, after performing the communication with the at least one UE on the second cell according to the second spectrum, and
wherein the third cell is allocated in response to detecting that the second cell according to the second spectrum in the second area is not available by the DU or a CBSD manager.

11. The RU of claim 1,
wherein the instructions, when executed by the at least one processor individually or collectively, cause the RU to:
transmit, to the DU, a request message for performing device to device (D2D) communication;
receive a response message including a key for the D2D communication with a neighboring RU recognized by the DU; and
maintain communication with the RU and the DU through the D2D communication established with the neighboring RU based on the key.

12. The RU of claim 1,
wherein the instructions, when executed by the at least one processor individually or collectively, cause the RU to:
transmit, to the DU, a management plane message including another configuration information requesting the spectrum for the CBRS, wherein the another configuration information includes the mode in which the RU is moving on another predetermined path and path information for each of other areas of the another predetermined path;
perform communication with at least one user equipment (UE) on a third cell according to a third spectrum allocated based on the another configuration information in a third area from among the other areas; and
perform communication with at least one UE on a fourth cell according to a fourth spectrum allocated based on the another configuration information in a fourth area changed from the third area according to moving of the RU from among the other areas.

13. The RU of claim 1,
wherein the RU includes a moving body on the predetermined path or a path having a random pattern, and
wherein the RU includes a RU providing the CBRS.

14. A method performed by a radio unit (RU) comprising:
based on a start-up procedure with a distributed unit (DU), transmitting, to the DU, a management plane message including configuration information requesting a spectrum for citizens broadband radio service (CBRS), wherein the configuration information includes a mode in which the RU is moving on a predetermined path and path information for each of areas of the predetermined path;
performing communication with at least one user equipment (UE) on a first cell according to a first spectrum allocated based on the configuration information in a first area from among the areas; and
performing communication with at least one UE on a second cell according to a second spectrum allocated based on the configuration information in a second area changed from the first area according to moving of the RU from among the areas.

15. A non-transitory computer-readable storage medium, when executed by at least one processor of a radio unit (RU) comprising a transceiver individually or collectively, stores one or more programs including instructions that cause the RU to:
based on a start-up procedure with a distributed unit (DU), transmit, to the DU, a management plane message including configuration information requesting a spectrum for citizens broadband radio service (CBRS), wherein the configuration information includes a mode in which the RU is moving on a predetermined path and path information for each of areas of the predetermined path;
perform communication with at least one user equipment (UE) on a first cell according to a first spectrum allocated based on the configuration information in a first area from among the areas; and
perform communication with at least one UE on a second cell according to a second spectrum allocated based on the configuration information in a second area changed from the first area according to moving of the RU from among the areas.
